# EUROPEAN PATENT APPLICATION

(11) **EP 4 841 526 A1**
(43) Date of publication of application: **18.11.2026**
(21) Application number: 26172351.4
(22) Date of filing: 14.04.2026
(51) Int. Cl.: G06N 10/60, G06N 10/20

(54) **INFORMATION PROCESSING PROGRAM, INFORMATION PROCESSING METHOD, AND INFORMATION PROCESSING DEVICE**

(30) Priority: 16.05.2025 JP 2025082797
(71) Applicant: FUJITSU LIMITED, Kawasaki-shi, Kanagawa 211-8588 (JP)
(72) Inventor: TRAN, Hoan Quoc, Kawasaki-shi, 211-8588 (JP)
(74) Representative: Haseltine Lake Kempner LLP

(57) **Abstract**

An information processing program for causing a computer to execute a process, the process includes: obtaining a plurality of first datasets each representing a quantum state that follows a target distribution, the plurality of first datasets to be subjected to a forward diffusion process that transforms, in stages, a quantum dataset representing a quantum state, to randomize the quantum dataset; and transforming each of the obtained plurality of first datasets, using a quantum circuit that specifies applying, to a many-body system that includes a main system and an auxiliary system, a time-evolution operator that includes a time-independent Hamiltonian and subsequently performing a projective measurement of the auxiliary system, up to a predetermined stage of the forward diffusion process to randomize each of the plurality of first datasets, the main system corresponding to a quantum dataset representing a quantum state.

## Description

### FIELD

The embodiments discussed herein are related to an information processing program, an information processing method, and an information processing device.

### BACKGROUND

Conventionally, there is a technology called a quantum denoising diffusion probabilistic model, which includes a forward diffusion process that progressively transforms data representing a quantum state that follows a target distribution to randomize that data, and a reverse diffusion process that progressively transforms data representing a random quantum state to follow the target distribution. The forward diffusion process progressively transforms data representing the quantum state that follows the target distribution to randomize the data representing the quantum state, for example, by applying a random quantum circuit to the data representing the quantum state K times. The reverse diffusion process progressively transforms the data representing the random quantum state to follow the target distribution, for example, by applying a variational quantum circuit to the data representing the random quantum state K times.

For example, one prior art technique simulates a quantum circuit as a classical circuit, and operates the classical circuit using a first input to obtain a noise-free data distribution. Another technique employs a chaotic Hamiltonian to perform quantum quenching and performs sampling of an observable of the quantum thermal state. Additionally, another technique probabilistically cancels measurement-based noise in a quantum device. Additionally, another technique employs a hybrid quantum-classical computing system, including trapped ion ensembles, to provide an approximate solution for a combinatorial optimization problem. For example, refer to JP 2023-035941 A; JP 2022-511331 A; US 2023-0196172 A1; and US 2021-0056455 A1.

### SUMMARY

It is an object in one aspect of the embodiments to at least solve the above problems in the conventional technologies.

According to an aspect of an embodiment, an information processing program for causing a computer to execute a process, the process includes: obtaining a plurality of first datasets each representing a quantum state that follows a target distribution, the plurality of first datasets to be subjected to a forward diffusion process that transforms, in stages, a quantum dataset representing a quantum state, to randomize the quantum dataset; and transforming each of the obtained plurality of first datasets, using a quantum circuit that specifies applying, to a many-body system that includes a main system and an auxiliary system, a time-evolution operator that includes a time-independent Hamiltonian and subsequently performing a projective measurement of the auxiliary system, up to a predetermined stage of the forward diffusion process to randomize each of the plurality of first datasets, the main system corresponding to a quantum dataset representing a quantum state.

### BRIEF DESCRIPTION OF DRAWINGS

Reference will now be made, by way of example only, to the following drawings, in which:
Fig. 1 is an explanatory diagram depicting an implementation example of an information processing method according to an embodiment.
Fig. 2 is an explanatory diagram depicting an example of an information processing system 200.
Fig. 3 is a block diagram depicting an example of a hardware configuration of an information processing device 100.
Fig. 4 is a block diagram depicting an example of a hardware configuration of a quantum computing device 201.
Fig. 5 is a block diagram depicting an example of a functional configuration of the information processing device 100.
Fig. 6 is an explanatory diagram (Part 1) depicting a first operation example for implementing a QDDPM.
Fig. 7 is an explanatory diagram (Part 2) depicting the first operation example for implementing the QDDPM.
Fig. 8 is an explanatory diagram (Part 1) depicting a second operational example for implementing the QDDPM.
Fig. 9 is an explanatory diagram (Part 2) depicting the second operational example for implementing the QDDPM.
Fig. 10 is an explanatory diagram depicting an example of an effect.
Fig. 11 is an explanatory diagram (Part 1) depicting a specific example of a quantum circuit according to a conventional scheme for implementing a QDDPM.
Fig. 12 is an explanatory diagram (Part 2) depicting a specific example of a quantum circuit according to a conventional scheme for implementing a QDDPM.
Fig. 13 is an explanatory diagram (Part 1) depicting a specific example of the effect.
Fig. 14 is an explanatory diagram (Part 2) depicting a specific example of the effect.
Fig. 15 is an explanatory diagram (Part 3) depicting a specific example of the effect.
Fig. 16 is an explanatory diagram (Part 4) depicting a specific example of the effect.
Fig. 17 is an explanatory diagram (Part 5) depicting a specific example of the effect.
Fig. 18 is an explanatory diagram (Part 6) depicting a specific example of the effect.
Fig. 19 is an explanatory diagram (Part 7) depicting a specific example of the effect.
Fig. 20 is a flowchart depicting an example of the overall process procedure.
Fig. 21 is a flowchart depicting an example of a procedure of a first forward diffusion process.
Fig. 22 is a flowchart depicting an example of a procedure of a second forward diffusion process.
Fig. 23 is a flowchart depicting an example of a procedure of a third forward diffusion process.

### DESCRIPTION OF EMBODIMENTS

First problems associated with the conventional techniques are discussed. One problem is that it is difficult to implement a quantum denoising diffusion probabilistic model on a quantum computer. For example, implementing the forward diffusion process of the quantum denoising diffusion probabilistic model involves preparing K random quantum circuits for each dataset. Therefore, handling N datasets involves preparing N×K random quantum circuits, which makes it difficult to implement the forward diffusion process of the quantum denoising diffusion probabilistic model.

Embodiments of an information processing program, an information processing method, and an information processing device according to the present disclosure are described in detail herein with reference to the accompanying drawings.

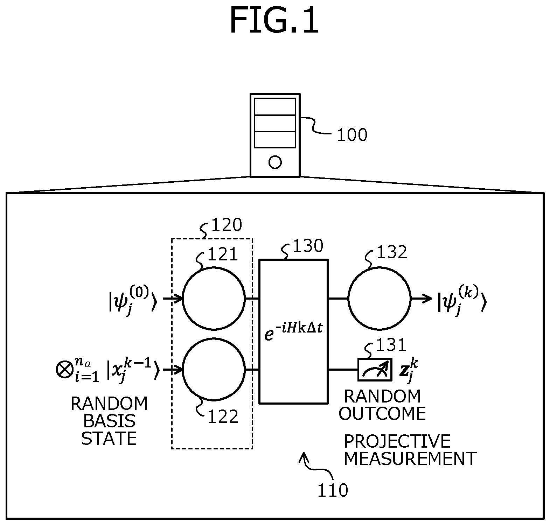

Fig. 1 is an explanatory diagram depicting an example of an information processing method according to an embodiment. An information processing device 100 is a computer for implementing a quantum denoising diffusion probabilistic model. The information processing device 100 may be, for example, a server, a personal computer (PC), or the like.

For convenience in the following description, when a subscript is assigned to a specific character, it may be denoted as "(specific character)_(subscript)". Similarly, for convenience, when a superscript is assigned to a specific character, it may be denoted as "(specific character)^(superscript)". Also, for convenience, when a tilde (~) is placed directly above a specific character, it may be denoted as "(specific character)~".

In the following description, the quantum denoising diffusion probabilistic model may be denoted as "QDDPM". Refer to Zhang, Bingzhi, et al. "Generative quantum machine learning via denoising diffusion probabilistic models", Physical Review Letters 132.10 (2024): 100602 for specific details regarding QDDPM.

The QDDPM includes a forward diffusion process that progressively transforms data representing a quantum state that follows a target distribution to randomize the data, and a reverse diffusion process that progressively transforms data representing a random quantum state to follow the target distribution. Data representing a quantum state may also be referred to as a quantum dataset.

The forward diffusion process is a progressive transformation that randomizes a quantum dataset representing a quantum state that follows a target distribution, for example, by applying a random quantum circuit to the quantum dataset representing the quantum state, K times. The random quantum circuit may be, for example, a quantum circuit with a random unitary. Specifically, the forward diffusion process corresponds to generating a quantum dataset representing the quantum state |ψ_i^(K)> by applying a random quantum circuit U_k^(i) to a quantum dataset representing a quantum state |ψ_i^(0)>, K times, where k=1, ..., K. Specifically, the forward diffusion process transitions the quantum state to an ensemble of random quantum states. Specifically, the forward diffusion process is defined by the following formula (1):
$\left|{ψ}_{i}^{\left(T\right)}\right〉 = {U}_{1}^{\left(i\right)} … {U}_{T - 1}^{\left(i\right)} {U}_{T}^{\left(i\right)} \left|{ψ}_{i}^{\left(0\right)}\right〉$ (1)

The reverse diffusion process is a progressive transformation of a quantum dataset representing a quantum state to follow a target distribution, for example, by applying a variational quantum circuit to the quantum data representing a random quantum state, K times. Specifically, the reverse diffusion process corresponds to generating a quantum dataset representing the quantum state |ψ~_j^(0)> by applying a variational quantum circuit V(*θ*_(k)) that uses an auxiliary qubit representing |0_a> to the quantum dataset representing the quantum state |*ψ*~_j^(K)>, K times, where k=K, ..., 1, and |0_a> represents the auxiliary qubit.

A quantum circuit is a combination of quantum gates that manipulate a quantum state represented by N qubits. N qubits have the capacity to represent 2^{N} classical states. Quantum circuits may be operated by a quantum computer, for example. A quantum circuit may include, for example, a quantum gate that manipulates a quantum state represented by a single qubit, or a quantum gate with a function of creating entanglement between two qubits. A variational quantum circuit is a quantum circuit with variable parameters.

There are quantum machine learning technologies that apply the principles of quantum computation to machine learning. Quantum machine learning trains a machine learning model that outputs quantum datasets tailored to a desired purpose based on input quantum datasets. The desired purpose may be, for example, generating new quantum datasets corresponding to the input quantum datasets. The update may be performed, for example, by a variational quantum algorithm (VQA).

Quantum machine learning involves, for example, preparing variational quantum circuits to be applied to quantum datasets that follow a target distribution, and training the variational quantum circuits, which serve as a machine learning model, by updating parameters of the variational quantum circuits to match the desired purpose. Refer to Havlicek, Vojtech, et al. "Supervised learning with quantum-enhanced feature spaces." Nature 567.7747 (2019): 209-212 and Schuld, Maria, and Nathan Killoran. "Quantum machine learning in feature Hilbert spaces." Physical review letters 122.4 (2019): 040504. for specific details regarding quantum machine learning. Refer to Cerezo, Marco, et al. "Variational quantum algorithms." Nature Reviews Physics 3.9 (2021): 625-644 for specific details regarding the variational quantum algorithm.

A QDDPM has the potential to develop a machine learning model in quantum machine learning. Specifically, the reverse diffusion process of a QDDPM may realize a function of outputting a new quantum dataset that follows a target distribution based on an input quantum dataset. Therefore, the combination of K variational quantum circuits relevant to the reverse diffusion process within the QDDPM may constitute a machine learning model in quantum machine learning.

Therefore, it may be desired to implement a QDDPM by training the K variational quantum circuits relevant to the reverse diffusion process. In such circumstances, to train the K variational quantum circuits relevant to the reverse diffusion process, K random quantum circuits relevant to the forward diffusion process are to be appropriately prepared for each quantum dataset. Therefore, N×K random quantum circuits relevant to the forward diffusion process are appropriately prepared for N quantum datasets, which tends to make implementation of a QDDPM difficult.

Conventionally, when training variational quantum circuits for a k-th stage from the end of the reverse diffusion process, for example, the k-th stage variational quantum circuits are trained such that the outputs of the k-th stage variational quantum circuits match the inputs of the quantum circuits for the k-th stage from the beginning of the forward diffusion process, which correspond to the k-th stage variational quantum circuits. Specifically, the k-th stage variational quantum circuits are trained to reduce the distance between the quantum datasets output from the variational quantum circuits for the k-th stage from the end of the reverse diffusion process and the quantum datasets input to the quantum circuits for the k-th stage from the beginning of the forward diffusion process.

As described, to train the k-th stage variational quantum circuits of the reverse diffusion process, N random quantum circuits are prepared for use as the quantum circuits for the k-th stage from the beginning of the forward diffusion process, and N×K random quantum circuits are prepared for the entire QDDPM. Additionally, the preparation of random quantum circuits may be difficult on noisy quantum computers. These issues make QDDPM implementation challenging.

Therefore, the present embodiment describes an information processing method that facilitates implementation of a QDDPM. This information processing method facilitates the QDDPM implementation by reducing the number of quantum circuits prepared for implementing the forward diffusion process.

In Fig. 1, the forward diffusion process of the QDDPM is assumed to include a K-staged forward diffusion process that transforms quantum datasets representing quantum states to randomize the quantum datasets. The reverse diffusion process of the QDDPM is assumed to include a K-staged reverse diffusion process that transforms quantum datasets representing quantum states to follow a target distribution. The information processing device 100 obtains first datasets each representing a quantum state that follows a target distribution, where the first datasets are subject to the forward diffusion process of the QDDPM. The first datasets are quantum datasets.

In the implementation of the QDDPM, to train the variational quantum circuit for the k-th stage from the end of the reverse diffusion process, it is desired to prepare, for comparison with the output of the variational quantum circuit, the quantum datasets before the randomization transformation at the k-th stage from the beginning of the forward diffusion process. Therefore, it is desired to prepare, based on the first datasets, the quantum datasets before the randomization transformation at each stage of the forward diffusion process.

To address this issue, the information processing device 100 sets the forward diffusion process to reduce the number of quantum circuits prepared for implementing the forward diffusion process, and prepare the quantum datasets before the randomization transformation at each stage of the forward diffusion process based on the first datasets.

(1-1) The information processing device 100 stores a quantum circuit 110, for example. The quantum circuit 110 specifies applying a time-evolution operator to a many-body system that includes a main system 121 and an auxiliary system 122 and subsequently performing a projective measurement of the auxiliary system 122. The time-evolution operator includes a time-independent Hamiltonian. The quantum circuit 110 includes a component 130 that applies the time-evolution operator to the many-body system and a component 131 that performs a projective measurement of the auxiliary system 122. Specifically, the projective measurement may be a Z-basis measurement of the Pauli operator.

The main system 121 corresponds to a quantum dataset representing a quantum state expressible by n_d qubits. Specifically, the main system 121 is settable with a quantum dataset. The auxiliary system 122 corresponds to a quantum dataset representing an initialized quantum state expressible with n_a qubits. Specifically, the auxiliary system 122 is settable with a quantum dataset. The quantum dataset set to the main system 121 is transformed to an output 132. The output 132 includes a quantum dataset.

Here, the quantum state |ψ>_(tot) in the entire many-body system is defined by the following formula (2), using the bit sequence z_A={0,1}^n_a obtained by the projective measurement of auxiliary system 122 and the probability p(z_A) of a bit sequence z_A, where |ϕ(z_A)>_D is the quantum state in the main system 121, determined according to the bit sequence z_A.${\left|ψ\right〉}_{tot} = {\sum }_{{z}_{A}} \sqrt{p \left({z}_{A}\right)} {\left|ϕ\left({z}_{A}\right)\right〉}_{D} ⊗ \left|{z}_{A}\right〉$ (2)

Here, the quantum state ensemble {|ϕ(z_A)>_D, p(z_A)} approaches the k-design random quantum state ensemble as n_a increases. This ensemble may also be referred to as a projection ensemble.

In other words, the quantum state |ϕ(z_A)>_D in the main system 121 is transformed to be randomized. Thus, the quantum circuit 110 is configured to implement a process that transforms the quantum dataset set to the main system 121 to randomize the quantum dataset. Refer to Choi, Joonhee, et al. "Preparing random states and benchmarking with many-body quantum chaos." Nature 613.7944 (2023): 468-473; Cotler; Jordan S., et al. "Emergent quantum state designs from individual many-body wave functions." PRX quantum 4.1 (2023): 010311; and Mok, Wai-Keong, et al. "Optimal Conversion from Classical to Quantum Randomness via Quantum Chaos." arXiv preprint arXiv:2410.05181 (2024).

In this case, one possible approach may involve, for example, the information processing device 100 storing quantum circuits 110 that specify applying the time-evolution operator for k unit times to transform each of the first datasets up to the k-th stage of the forward diffusion process. In this approach, the quantum circuits 110 are commonly used across the first datasets. In this case, the information processing device 100 prepares one quantum circuit 110 for each stage of the forward diffusion process, regardless of the number of first datasets.

Alternatively, the information processing device 100 may store, for example, a quantum circuit 110 that specifies applying the time-evolution operator for one unit time to transform each of the first datasets up to the k-th stage of the forward diffusion process. In this approach, the information processing device 100 applies the quantum circuit 110 to each first dataset k times. In this case, the information processing device 100 prepares one quantum circuit 110 for the entire forward diffusion process, regardless of the number of first datasets and the number of stages in the forward diffusion process of the QDDMP.

(1-2) The information processing device 100 transforms each of the obtained first datasets, for example using the quantum circuit 110, up to a predetermined stage of the forward diffusion process to randomize each of the first datasets. Specifically, as described above, the quantum circuit 110 may specify applying the time-evolution operator for k unit times. In this case, the information processing device 100 transforms each first dataset up to the k-th stage of the forward diffusion process to randomize each first dataset, specifically by setting each first dataset to the main system 121 within the quantum circuit 110.

Alternatively, the quantum circuit 110 may specify applying the time-evolution operator for one unit time. In this case, the information processing device 100 transforms each first dataset up to the k-th stage of the forward diffusion process to randomize each first dataset, specifically by repeating k times, the process of setting each first dataset to the main system 121 within the quantum circuit 110 and feeding back the output 132 to the main system 121.

This allows the information processing device 100 to appropriately implement each stage of the forward diffusion process and prepare quantum datasets used for training the variational quantum circuit for each stage of the reverse diffusion process, enabling the implementation of the QDDPM. In this case, the information processing device 100 does not need to prepare a random quantum circuit for each first dataset.

In implementations where the number of first datasets is N, the information processing device 100 may prepare one or K quantum circuits 110, rather than preparing N×K random quantum circuits. Additionally, the information processing device 100 may prepare quantum circuits that achieve ensemble-based transformation of the first datasets, which are more available, for example, on a noisy quantum computer. Therefore, the information processing device 100 facilitates the implementation of the QDDPM.

While the description above pertains to cases where the functions of the information processing device 100 are realized by a single computer, this is not limited thereto. For example, the functions of the information processing device 100 may be implemented through a collaboration of multiple computers. For instance, the functions of the information processing device 100 may be implemented on a cloud system.

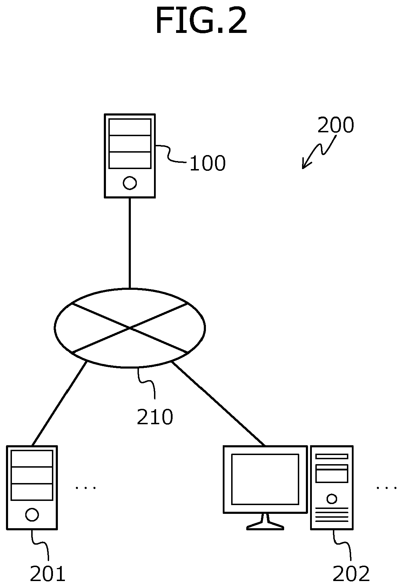

With reference to Fig. 2 next, an example of an information processing system 200 that uses the information processing device 100 depicted in Fig. 1 is described.

Fig. 2 is an explanatory diagram depicting an example of an information processing system 200. In Fig. 2, the information processing system 200 includes the information processing device 100, a quantum computing device 201, and one or more client devices 202.

The information processing device 100 and the quantum computing device 201 are coupled via a wired or wireless network 210 in the information processing system 200. The network 210 may be, for example, a local area network (LAN), a wide area network (WAN), the Internet, or the like. Additionally, the information processing device 100 and the client device 202 are coupled via the wired or wireless network 210 in the information processing system 200.

The information processing device 100 is a computer for implementing a QDDPM. The information processing device 100 obtains a processing request that requests the implementation of the QDDPM. The information processing device 100 may obtain the processing request by, for example, receiving the processing request from the client device 202. The information processing device 100 may obtain the processing request, for example, by accepting input of the processing request based on user operation input.

The information processing device 100 implements the QDDPM in response to the processing request, in collaboration with the quantum computing device 201, in a manner similar to that depicted in Fig. 1. The information processing device 100 configures the forward diffusion process to reduce the number of quantum circuits prepared for implementing the forward diffusion process, for example, in a manner similar to that depicted in Fig. 1.

The information processing device 100 prepares quantum datasets before the randomization transformation at each stage of the configured forward diffusion process based on the quantum datasets, for example, in a manner similar to that depicted in Fig. 1. Specifically, the information processing device 100 assigns to the quantum computing device 201 a quantum computation for preparing the quantum datasets before the randomization transformation at each stage of the forward diffusion process.

The information processing device 100 trains the reverse diffusion process, for example, based on the prepared quantum datasets. Specifically, the information processing device 100 assigns to the quantum computing device 201 a quantum computation for training the variational quantum circuit for each stage of the reverse diffusion process.

Specifically, the information processing device 100 obtains, for each stage of the reverse diffusion process, quantum datasets before the randomization transformation at the corresponding stage of the forward diffusion process. Specifically, the information processing device 100 trains the variational quantum circuit at each stage of the reverse diffusion process to reduce the difference between the quantum datasets output from the variational quantum circuit at that stage of the reverse diffusion process and the obtained quantum datasets.

The information processing device 100 implements the QDDPM based on the configured forward diffusion process and the trained reverse diffusion process. The information processing device 100 outputs the implemented QDDPM. The output format may be, for example, display on a monitor, printing output to a printer, transmission to another computer, or storage in a memory area. The information processing device 100, for example, may transmit the implemented QDDPM to another computer. The information processing device 100 may, for example, store the implemented QDDPM in an available manner. The information processing device 100 may be, for example, a server, a personal computer (PC), or the like.

The quantum computing device 201 is a computer that performs the requested computational processing. The quantum computing device 201 is configured to perform quantum computations. The quantum computing device 201 may also be configured to perform classical computations. The quantum computing device 201 performs quantum computations under the control of the information processing device 100. The quantum computing device 201 returns the results of the performed quantum computations to the information processing device 100. The quantum computing device 201 may be, for example, an actual quantum computer. The quantum computing device 201 may also be, for example, a classical computer that runs a quantum simulator. The classical computer may be, for example, a server, a PC, or the like.

The client device 202 is a computer used by a user wishing to implement the QDDMP. The client device 202 generates a processing request for the implementation of the QDDMP based on user input and transmits the processing request to the information processing device 100. The client device 202 may receive the implemented QDDMP from the information processing device 100. The client device 202 may be, for example, a PC, a tablet device, a smartphone, or the like.

While the description herein assumes that the information processing device 100 is a device remote from the quantum computing device 201, this is not limited to such cases. For example, the information processing device 100 may possess the functionality of the quantum computing device 201, and may also operate as the quantum computing device 201. In this case, the information processing system 200 may omit the quantum computing device 201.

While the description herein assumes that the information processing device 100 is a device remote from the client device 202, this is not limited to such cases. For example, the information processing device 100 may have the functionality of the client device 202, and may also operate as the client device 202. In this instance, the information processing system 200 may omit the client device 202.

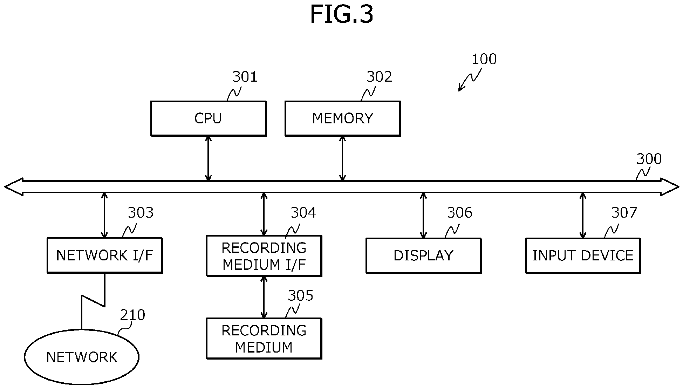

Next, with reference to Fig. 3, an example of a hardware configuration of the information processing device 100 is described.

Fig. 3 is a block diagram depicting an example of a hardware configuration of the information processing device 100. In Fig. 3, the information processing device 100 has a central processing unit (CPU) 301, a memory 302, and a network interface (I/F) 303. Further, the information processing device 100 has a recording medium I/F 304, a recording medium 305, a display 306, and an input device 307. Further, the components are coupled to each other by a bus 300.

Here, the CPU 301 governs overall control of the information processing device 100. The memory 302 includes, for example, a read-only memory (ROM), a random-access memory (RAM), a flash ROM, etc. In particular, for example, the flash ROM and the ROM store therein various programs and the RAM is used as a work area of the CPU 301. The programs stored in the memory 302 are loaded onto the CPU 301, whereby encoded processes are executed by the CPU 301.

The network I/F 303 is coupled to the network 210 through a communications line and communicates with other computers via the network 210. Further, the network I/F 303 administers an internal interface with the network 210 and controls the input and output of data from the other computers. The network I/F 303, for example, is a modem, a LAN adapter, etc.

The recording medium I/F 304, under the control of the CPU 301, controls the reading and writing of data with respect to the recording medium 305. The recording medium I/F 304 is, for example, a disk drive, a solid-state drive (SSD), a universal serial bus (USB) port, etc. The recording medium 305 is a nonvolatile memory storing therein data written thereto under the control of the recording medium I/F 304. The recording medium 305, for example, is a disk, a semiconductor memory, a USB memory, etc. The recording medium 305 may be removable from the information processing device 100.

The display 306 displays a cursor, icons, toolboxes, documents, images, or functional information, etc. The display 306, for example, is a cathode ray tube (CRT), a liquid crystal display, or an organic electroluminescence (EL) display, etc. The input device 307 has keys for inputting characters, numerals, or various instructions and performs data input. The input device 307, for example, is a keyboard or a mouse, etc. The input device 307, for example, may be a touch-panel input pad or numeric keypad.

In addition to the components above, the information processing device 100 may have, for example, a camera, etc. In addition to the components above, the information processing device 100 may have, for example, a printer, a scanner, a microphone, or a speaker, etc. Further, the information processing device 100, for example, may have the recording medium I/F 304 and the recording medium 305 in plural. Further, in the information processing device 100, for example, the display 306 and/or the input device 307, etc. may be omitted. Further, in the information processing device 100, for example, the recording medium I/F 304 and the recording medium 305 may be omitted.

In an instance in which the quantum computing device 201 is a classical computer that starts the quantum simulator, an example of a hardware configuration of the quantum computing device 201, for example, is a same as the example of the hardware configuration of the information processing device 100 depicted in Fig. 3 and thus, description thereof is omitted herein.

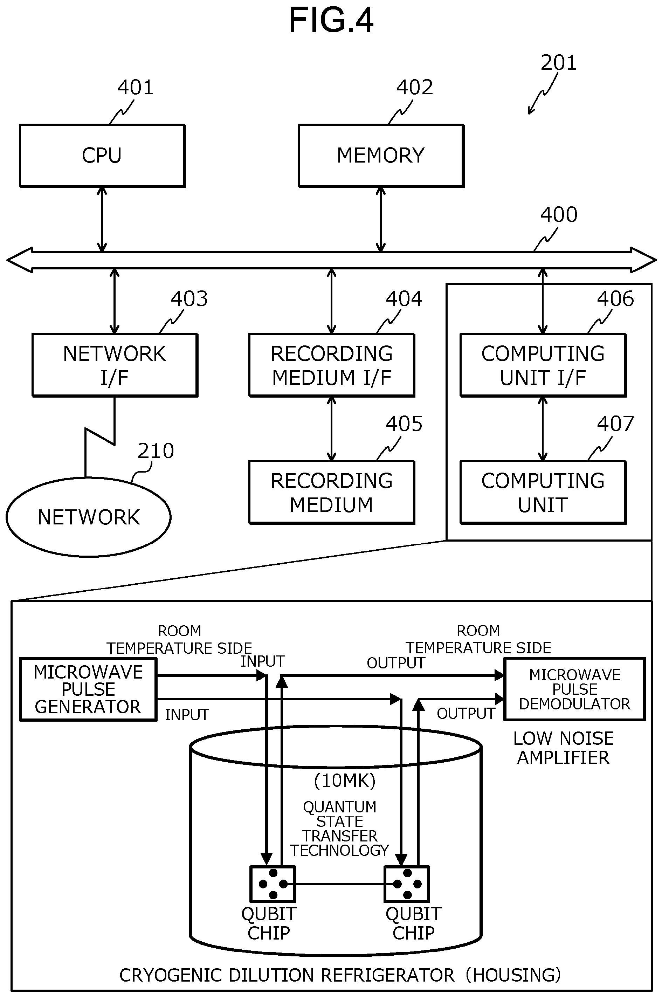

On the other hand, an instance in which the quantum computing device 201 is an actual quantum computer is conceivable. Here, with reference to Fig. 4, an example a hardware configuration of the quantum computing device 201 in an instance in which the quantum computing device 201 is an actual quantum computer is described.

Fig. 4 is a block diagram depicting an example of a hardware configuration of the quantum computing device 201. In Fig. 4, the quantum computing device 201 has a CPU 401, a memory 402, a network I/F 403, a recording medium I/F 404, and a recording medium 405. The quantum computing device 201 further has a computing unit I/F 406 and a computing unit 407. Further, the components are coupled by a bus 400.

Here, the CPU 401 governs overall control of the quantum computing device 201. The memory 402 includes, for example, a ROM, a RAM, and a flash ROM. For example, the flash ROM and the ROM store various programs, and the RAM is used as a work area for the CPU 401. The programs stored in the memory 402 are loaded onto the CPU 401, whereby the CPU 401 executes encoded processes.

The network I/F 403 is coupled to the network 210 through a communications line and is coupled to other computers via the network 210. The network I/F 403 administers an internal interface with the network 210 and controls the input and output of data from other computers. The network I/F 403 is, for example, a modem or a LAN adapter.

The recording medium I/F 404 controls the reading and writing of data with respect to the recording medium 405 under the control of the CPU 401. The recording medium I/F 404 is, for example, a disk drive, an SSD, a USB port, etc. The recording medium 405 is a nonvolatile memory that stores therein data written thereto under the control of the recording medium I/F 404. The recording medium 405 is, for example, a disk, a semiconductor memory, a USB memory, etc. The recording medium 405 may be removable from the quantum computing device 201.

The computing unit I/F 406 controls access to the computing unit 407 under the control of the CPU 401. The computing unit I/F 406 converts signals output from the CPU 401 into input signals for the computing unit 407 using a microwave pulse generator and transmits the converted signals to the computing unit 407. The computing unit I/F 406 converts the signals output from the computing unit 407 into input signals for the CPU 401 using a microwave pulse demodulator and transmits the converted signals to the CPU 401. The computing unit 407 is a computing device equipped with one or more quantum bit chips cooled to an extremely low temperature of 10 mK. Each quantum bit chip represents, for example, a logical quantum bit. The computing unit 407 performs a predetermined computation according to an input signal using one or more quantum bit chips, and outputs an output signal corresponding to the result of performing the predetermined computation.

In addition to the components above, the quantum computing device 201 may have, for example, a keyboard, a mouse, a display, a printer, a scanner, a microphone, a speaker, etc. The computing device 201 may also have the recording medium I/F 404 and recording medium 405 in plural. Further, in the quantum computing device 201, the recording medium I/F 404 and the recording medium 405 may be omitted. Further, the quantum bit chip in the computing unit 407 may be controlled by a method other than microwaves. The quantum bit chip in the computing unit 407 may implement, for example, optical quantum bits.

As the hardware configuration example of the client device 202 is a same as the hardware configuration example of the information processing device 100 depicted in Fig.3, explanation thereof is omitted.

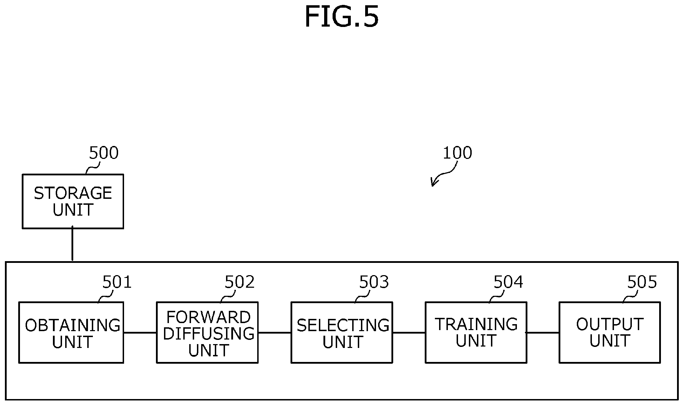

Next, with reference to Fig. 5 an example of a functional configuration of the information processing device 100 is described.

Fig. 5 is a block diagram depicting an example of the functional configuration of the information processing device 100. The information processing device 100 includes a storage unit 500, an obtaining unit 501, a forward diffusing unit 502, a selecting unit 503, a training unit 504, and an output unit 505.

The storage unit 500 may be implemented, for example, as storage areas, such as the memory 302 and the recording medium 305 depicted in Fig. 3. While the following describes a case where the storage unit 500 is incorporated in the information processing device 100, configuration is not limited hereto. For example, the storage unit 500 may be incorporated in a device remote from the information processing device 100, enabling access to the contents stored in the storage unit 500 by the information processing device 100.

The obtaining unit 501, the forward diffusing unit 502, the selecting unit 503, the training unit 504, and the output unit 505 function as an example controller. Specifically, the obtaining unit 501, the forward diffusing unit 502, the selecting unit 503, the training unit 504, and the output unit 505 may be implemented, for example, by causing the CPU 301 to execute programs stored in a storage area such as the memory 302 or the recording medium 305 depicted in Fig. 3, or via the network I/F 303. Processing results from the respective functional units are stored to a storage area such as the memory 302 or the recording medium 305 depicted in Fig. 3.

The storage unit 500 stores various information referenced or updated during processing by each functional unit. For example, the storage unit 500 stores a target distribution. The target distribution represents a range of quantum states. The target distribution may be obtained, for example, by the obtaining unit 501. The target distribution may be preset by a user, for example.

The storage unit 500 stores, for example, first datasets, each of which represents a quantum state that follows the target distribution; the first datasets are to be subjected to the forward diffusion process in the QDDPM, which progressively transforms a quantum dataset representing a quantum state to randomize the quantum dataset. The number of stages in the forward diffusion process is denoted by K and the number of first datasets is denoted by N. The first datasets are obtained, for example, by the obtaining unit 501. The first datasets may be preset by the user, for example. In the following description, each stage of the forward diffusion process may be referred to as a "forward diffusion stage."

The storage unit 500 stores, for example, second datasets, each of which represents a random quantum state; the second datasets are to be subjected to the reverse diffusion process in the QDDPM, which progressively transforms a quantum data representing a quantum state to follow the target distribution. The number of stages in the reverse diffusion process is K. The number of stages in the reverse diffusion process is equal to the number of stages in the forward diffusion process. The second datasets may be obtained, for example, by the obtaining unit 501. The second datasets may be preset by the user, for example. In the following description, each stage in the reverse diffusion process may be referred to as a "reverse diffusion stage."

The storage unit 500 may store, for example, one or more quantum circuits used to express the transformation operations at the respective forward diffusion stages in the forward diffusion process. For example, a quantum circuit specifies applying a time-evolution operator including a time-independent Hamiltonian to a many-body system including a main system and an auxiliary system, and subsequently performing a projective measurement of the auxiliary system, the main system corresponding to a quantum dataset representing a quantum state. Specifically, the storage unit 500 stores parameters of the one or more quantum circuits that represent the transformation operations at the respective forward diffusion stages in the forward diffusion process. The configuration of the one or more quantum circuits is performed, for example, by the forward diffusing unit 502. Specifically, the forward diffusing unit 502 configures one or K quantum circuits for the entire QDDPM, as will be described later.

The storage unit 500 may store, for example, one or more variational quantum circuits that represent the transformation operations at the respective reverse diffusion stages in the reverse diffusion process. Specifically, the storage unit 500 stores variational parameters of the one or more variational quantum circuits that represent the transformation operations at the respective reverse diffusion stages in the reverse diffusion process. The configuration of the one or more variational quantum circuits may be performed, for example, by the training unit 504. Specifically, the training unit 504 configures the one or more variational quantum circuits representing the transformation operations at the respective reverse diffusion stages in the reverse diffusion process sequentially from the beginning of the reverse diffusion process.

The obtaining unit 501 obtains various information used in the processes by the functional units. The obtaining unit 501 stores the obtained various information to the storage unit 500 and/or outputs the obtained information to each functional unit. The obtaining unit 501 may also output various information stored in the storage unit 500 to each functional unit. The obtaining unit 501 obtains various information based on, for example, user operation input. The obtaining unit 501 may receive the various information, for example, from a device remote from the information processing device 100.

The obtaining unit 501 obtains, for example, a processing request for the implementation of a QDDPM. The processing request may include, for example, a target distribution. The processing request may include, for example, first datasets, each of which represents a quantum state that follows a target distribution and is to be subjected to the forward diffusion process. The processing request may include, for example, second datasets, each of which represents a random quantum state and is to be subjected to the reverse diffusion process. Specifically, the obtaining unit 501 obtains the processing request by accepting an input of the processing request. Specifically, the obtaining unit 501 may obtain the processing request by receiving the processing request from a remote computer. The remote computer may be, for example, the client device 202 depicted in FIG. 2.

The obtaining unit 501 obtains a target distribution, for example. Specifically, the obtaining unit 501 obtains the target distribution by accepting an input of the target distribution. Specifically, the obtaining unit 501 may obtain the target distribution by receiving the target distribution from a remote computer. This remote computer may be, for example, the client device 202 depicted in FIG. 2. Specifically, the obtaining unit 501 may obtain the target distribution by extracting the target distribution from the processing request.

The obtaining unit 501 obtains, for example, first datasets that are to be subjected to the forward diffusion process, with each first dataset representing a quantum state that follows the target distribution. Specifically, the obtaining unit 501 obtains the first datasets by accepting an input of the first datasets. Specifically, the obtaining unit 501 may obtain the first datasets by receiving the first datasets from a remote computer. This remote computer may be, for example, the client device 202 depicted in FIG. 2. Specifically, the obtaining unit 501 may obtain the first datasets by extracting the first datasets from the processing request. Specifically, the obtaining unit 501 may obtain the first datasets by generating the first datasets according to the target distribution.

The obtaining unit 501 obtains, for example, second datasets that are to be subjected to the reverse diffusion process, with each second dataset representing a random quantum state. Specifically, the obtaining unit 501 may obtain the second datasets by accepting an input of the second datasets. Specifically, the obtaining unit 501 may obtain the second datasets by receiving the second datasets from a remote computer. This remote computer may be, for example, the client device 202 depicted in FIG 2. Specifically, the obtaining unit 501 may obtain the second datasets by extracting the second datasets from the processing request. Specifically, the obtaining unit 501 may obtain the second datasets by generating the second datasets.

The obtaining unit 501 may receive a start trigger to initiate a process of any of the functional units. The start trigger may be, for example, a predetermined operation input by a user. The start trigger may also be, for example, the reception of predetermined information from a remote computer. The start trigger may also be, for example, any functional unit outputting predetermined information. The obtaining unit 501 may, for example, recognize the obtaining of a processing request as a start trigger to start processes of the forward diffusing unit 502, the selecting unit 503, and the training unit 504.

The forward diffusing unit 502 implements the forward diffusion process. The forward diffusing unit 502 configures one or more quantum circuits. A quantum circuit specifies applying a time-evolution operator including a time-independent Hamiltonian to a many-body system including a main system and an auxiliary system, and subsequently specifies performing a projective measurement of the auxiliary system, the main system corresponding to a quantum dataset representing a quantum state. The forward diffusing unit 502 uses the configured one or more quantum circuits to transform each of the first datasets obtained by the obtaining unit 501 up to a predetermined forward diffusion stage in the forward diffusion process, to randomize each first dataset.

For example, the forward diffusing unit 502 configures, for each forward diffusion stage, a quantum circuit to specify applying a time-evolution operator including a Hamiltonian, to the many-body system for the time corresponding to the forward diffusion stage, and subsequently to specify performing a projective measurement of the auxiliary system. The time for the k-th forward diffusion stage is k times the unit time. The unit time corresponds to one forward diffusion stage.

For example, the forward diffusing unit 502 then transforms each first dataset up to each forward diffusion stage to randomize the first dataset by applying to each first dataset, the main system of the quantum circuit configured for the forward diffusion stage. This allows the forward diffusing unit 502 to implement the forward diffusion process and obtain each first dataset transformed up to each forward diffusion stage and thereby facilitates the training of the reverse diffusion process. The forward diffusing unit 502 reduces the number of quantum circuits configured for implementing the forward diffusion process, whereby the implementation of the forward diffusion process is facilitated.

Alternatively, the forward diffusing unit 502 may, for example, configure a quantum circuit that specifies applying to the many-body system for a unit time, a time-evolution operator including a Hamiltonian, and subsequently performing a projective measurement of the auxiliary system. The unit time corresponds to one forward diffusion stage.

The forward diffusing unit 502, for each forward diffusion stage, repeatedly applies the main system of the configured quantum circuit to each first dataset for a number of times corresponding to the forward diffusion stage and thereby transforms each first dataset up to said forward diffusion stage to thereby randomize each first dataset, where the k-th forward diffusion stage corresponds to applying the main system k times. This allows the forward diffusing unit 502 to implement the forward diffusion process and obtain each first dataset transformed up to each forward diffusion stage, thereby facilitating the training of the reverse diffusion process. The forward diffusing unit 502 reduces the number of quantum circuits configured for implementing the forward diffusion process and thereby facilitates implementation of the forward diffusion process.

The forward diffusing unit 502 may randomly initialize the auxiliary system during configuration of a quantum circuit. The forward diffusing unit 502 may, for example, set a random quantum state that follows a classical probability distribution, to the auxiliary system. This enables the forward diffusing unit 502 to transform the quantum dataset corresponding to the main system and thereby randomize the quantum dataset, even when the auxiliary system of the quantum circuit includes a relatively reduced number of qubits, thereby facilitate the implementation of the forward diffusion process. The forward diffusing unit 502 may initialize the auxiliary system to zero when configuring the quantum circuit.

The selecting unit 503 selects combinations of reverse diffusion stages to be trained by the training unit 504 and forward diffusion stages corresponding thereto. For example, the selecting unit 503 sequentially selects, from the beginning of the reverse diffusion process, combinations of stages of the reverse diffusion process and stages of the forward diffusion process corresponding thereto.

Specifically, the selecting unit 503 selects a combination of the k-th diffusion stage from the beginning of the forward diffusion process and the k-th reverse diffusion stage from the end of the reverse diffusion process, sequentially from k=K to k=1. This enables the selecting unit 503 to sequentially select the reverse diffusion stages to be trained by the training unit 504. The selecting unit 503 may control the training unit 504 to sequentially train the reverse diffusion stages, starting from the beginning of the reverse diffusion process.

Each time the selecting unit 503 selects a combination, the training unit 504 trains a variational quantum circuit that represents the operation of the reverse diffusion stage corresponding to the combination selected by the selecting unit 503. For example, each time the selecting unit 503 selects a combination, the training unit 504 trains the variational quantum circuit that represents the operation of the k-th reverse diffusion stage from the end of the reverse diffusion process by performing the following sequence of processes.

Specifically, the training unit 504 configures the variational quantum circuit to an initial state for the k-th reverse diffusion stage from the end of the reverse diffusion process, where the k-th reverse diffusion stage corresponds to the combination selected by the selecting unit 503. Specifically, based on the processing results from the forward diffusing unit 502, the training unit 504 obtains each of the first datasets before transformation at the k-th forward diffusion stage from the beginning of the forward diffusion process, which is relevant to the combination selected by the selecting unit 503. In other words, the training unit 504 obtains, for example, each of the first datasets after transformation at the (k-1)-th forward diffusion stage from the beginning of the forward diffusion process.

Specifically, the training unit 504 obtains each of the second datasets before transformation at the k-th reverse diffusion stage from the end of the reverse diffusion process, where the k-th reverse diffusion stage is relevant to the combination selected by the selecting unit 503. More specifically, for k≠K, the training unit 504 generates each of the second datasets before transformation at the k-th reverse diffusion stage in the reverse diffusion process using the variational quantum circuits trained for the (k+1)-th to K-th stages in the reverse diffusion process.

Specifically, the training unit 504 uses the configured variational quantum circuits to provisionally generate each of the second datasets after transformation at the k-th reverse diffusion stage from the end of the reverse diffusion process based on each of the second datasets before transformation at the k-th reverse diffusion stage. Specifically, the training unit 504 reconfigures and trains the variational quantum circuit to reduce the difference between each of the first datasets before transformation at the k-th forward diffusion stage and each of the second datasets after transformation at the k-th reverse diffusion stage. This allows the training unit 504 to implement the reverse diffusion process of the QDDPM.

Specifically, the training unit 504 may repeatedly perform the process of provisionally generating each of the second datasets after transformation at the k-th reverse diffusion stage from the end of the reverse diffusion process and the process of training the variational quantum circuit by reconfiguring the variational quantum circuit. This allows the training unit 504 to train the variational quantum circuit to accurately represent the operation at the k-th reverse diffusion stage.

The output unit 505 outputs the processing results from at least one functional unit. The output format may be, for example, display on a display, printing the output on a printer, transmission to an external device via the network I/F 303, storage in a storage area such as the memory 302 or the recording medium 305, or the like. This allows the output unit 505 to notify the user of the processing results from at least one functional unit, thereby improving the user-friendliness of the information processing device 100.

For example, the output unit 505 outputs structural information representing the structure of the QDDPM, which includes one or more quantum circuits that express the transformation operations of the respective forward diffusion stages in the forward diffusion process and one or more variational quantum circuits that express the transformation operations of the respective reverse diffusion stages in the reverse diffusion process. Specifically, the output unit 505 outputs the structural information to allow the user to access the structural information. Specifically, the output unit 505 transmits the structural information to a remote computer. This remote computer may be, for example, a client device 202 depicted in FIG. 2. Consequently, the output unit 505 makes the forward and reverse diffusion processes of the QDDPM available externally.

While the description herein is based on a case where the information processing device 100 includes the obtaining unit 501, the forward diffusing unit 502, the selecting unit 503, the training unit 504, and the output unit 505, configuration is not limited hereto. For example, the information processing device 100 may omit any of the functional units. Specifically, the information processing device 100 may omit the training unit 504. In this instance, the information processing device 100 may collaborate with a remote computer that functions as the training unit 504.

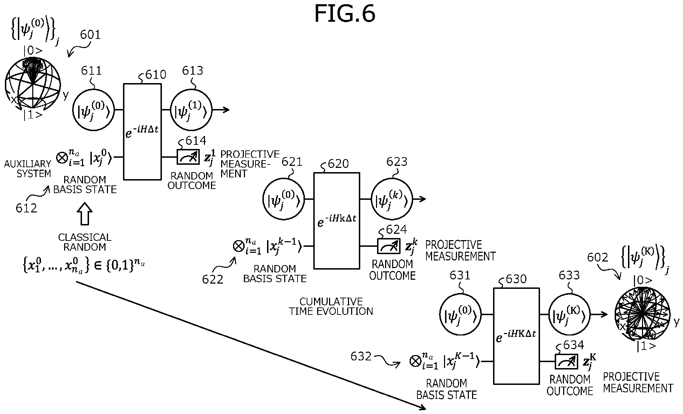

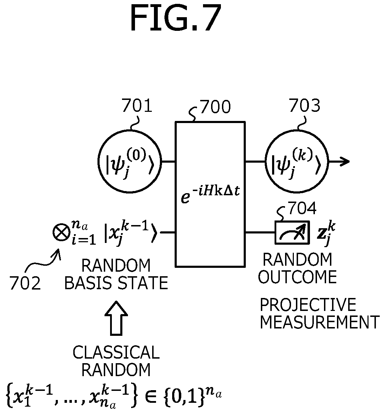

With reference to Figs. 6 to 10, an example of operation of the information processing device 100 will be described. First, with reference to Figs. 6 and 7, a description is given of a first example of operation in which the information processing device 100 implements a QDDPM.

Figs. 6 and 7 are explanatory diagrams depicting a first operation example implementing a QDDPM. In Fig. 6, the information processing device 100 obtains a time-evolution Δt and the number of diffusion steps K. The time-evolution Δt corresponds to the time for a single stage of the forward diffusion process. The number of diffusion steps K is the number of stages in the forward diffusion process. The forward diffusion process transforms a quantum dataset representing a quantum state that follows a target distribution 601 to a quantum dataset representing a quantum state that follows a random distribution 602.

The information processing device 100 obtains quantum datasets representing quantum states |ψ_j^(0)> each following the target distribution 601 and to be subjected to the forward diffusion process. The information processing device 100 implements the k-th stage in the forward diffusion process by configuring a quantum circuit to apply a time-evolution operator including a Hamiltonian H for a time k×Δt, where the Hamiltonian H is independent of time and k=1, ..., K.

Specifically, the information processing device 100 performs the cumulative time-evolution e^(-iHkΔt) of the Hamiltonian H on the tensor product state between each quantum dataset set to the n_d-qubit main system and the random computational basis state set to the n_a-qubit auxiliary system. This enables the information processing device 100 to implement the forward diffusion process in an appropriate manner. With reference to Fig. 7, a description is given of an example where the information processing device 100 configures a quantum circuit 700 and implements the k-th stage in the forward diffusion process.

As depicted in Fig. 7, the information processing device 100 configures the quantum circuit 700 for the k-th stage in the forward diffusion process to implement the k-th stage. The quantum circuit 700 includes a main system 701 and an auxiliary system 702. The main system 701 is configured with a quantum dataset to be transformed. The auxiliary system 702 is configured with a randomly initialized quantum dataset. The quantum circuit 700 outputs, as an output 703, the quantum dataset after randomization transformation of the main system 701. The quantum circuit 700 is equipped with a component 704 that performs a projective measurement of the auxiliary system 702.

The information processing device 100 uses the quantum state |ψ_j^(0)> represented by each obtained quantum dataset as the quantum state |ψ_in> represented by n_d qubits in the main system 701, as indicated by the following formula (3), where j=1, ..., N. The information processing device 100 sets the quantum state |x> represented by n_a qubits in the auxiliary system 702 to a random computational basis state represented by the following formulas (4) and (5). The information processing device 100 uses the tensor product state between the quantum state |ψ_in> and the quantum state |x> represented by the following formula (6) as the input data for the quantum circuit 700.$\left|{ψ}_{in}\right〉 = \left|{ψ}_{j}^{\left(0\right)}\right〉$ (3) $\left|x\right〉 = {⊗}_{j = 1}^{{n}_{a}} \left|{x}_{j}^{k - 1}\right〉$ (4) $\left(\left\{{x}_{1}^{k - 1},…,{x}_{{n}_{a}}^{k - 1}\right\}∈{\left\{0, 1\right\}}^{{n}_{a}}\right)$ (5) $\left|{ψ}_{in}\right〉 ⊗ \left|x\right〉$ (6)

The information processing device 100 time-evolves the input data using the time-evolution operator U_DA of the cumulative Hamiltonian represented by the following formula (7). After time-evolving the input data, the information processing device 100 obtains a bit sequence z represented by the following formula (8), which follows the probability p_x(z), by performing a projective measurement of the auxiliary system 702 in the component 704. Based on the measurement result z=zj^k, a pure quantum state |ψ_x(z_j^k)> is induced in the main system 701. The information processing device 100 identifies the pure quantum state |ψ_x(z_j^k)> induced in the main system 701 based on the measurement result z=zj^k and uses the same as the quantum state |ψ_j^k> after transformation. ${U}_{DA} = {e}^{- iHkΔt}$ (7) $z ∈ {\left\{0, 1\right\}}^{{n}_{a}}$ (8)

This allows the information processing device 100 to implement the transformation operations at the k-th stage in the forward diffusion process without configuring the quantum circuit 700 with randomly selected parameters, making the quantum circuit 700 commonly available for the respective obtained quantum datasets. Consequently, the information processing device 100 enables the reduction in the number of quantum circuits 700 used to implement the forward diffusion process, thereby facilitating the implementation of the QDDPM. The description now returns to Fig. 6.

As depicted in Fig. 6, specifically for k=1, the information processing device 100 configures the quantum circuit 610 to implement the first stage (for k=1) in the forward diffusion process. The quantum circuit 610 includes a main system 611 and an auxiliary system 612. The main system 611 is configured with a quantum dataset to be transformed. The auxiliary system 612 is configured with a randomly initialized quantum dataset. The quantum circuit 610 outputs, as the output 613, the quantum dataset after randomization-transformation of the main system 611. The quantum circuit 610 is equipped with a component 614 that performs a projective measurement of the auxiliary system 612.

The information processing device 100 sets the quantum state |ψ_in> represented by n_d qubits in the main system 611, as indicated by the above formula (3). The information processing device 100 sets the quantum state |x> represented by n_a qubits in the auxiliary system 612 to a random computational basis state represented by the following formulas (9) and (10). The information processing device 100 time-evolves the input data for a time kΔt=1Δt using the time-evolution operator U_DA of the cumulative Hamiltonian represented by the following formula (11).${⊗}_{i = 1}^{{n}_{a}} \left|{x}_{j}^{0}\right〉$ (9) $\left\{{x}_{1}^{0},…,{x}_{{n}_{a}}^{0}\right\} ∈ {\left\{0, 1\right\}}^{{n}_{a}}$ (10) ${e}^{- iHΔt}$ (11)

After time-evolving the input data, the information processing device 100 obtains a bit sequence z that follows the probability p_x(z) by performing a projective measurement of the auxiliary system 612 in the component 614. The information processing device 100 identifies the pure quantum state |ψ_x(z_j^1)> induced in the main system 611 based on the measurement result z=z_j^k=z_j^1, and uses the same as the quantum state |ψ_j^(1)> after transformation. This allows the information processing device 100 to complete the first stage (for k =1) of the forward diffusion process.

Specifically for 1<k<K, the information processing device 100 configures the quantum circuit 620 to implement the k-th stage in the forward diffusion process. The quantum circuit 620 includes a main system 621 and an auxiliary system 622. The main system 621 is configured with the quantum dataset to be transformed. The auxiliary system 622 is configured with a randomly initialized quantum dataset. The quantum circuit 620 outputs, as the output 623,the quantum data after randomization transformation of the main system 621. The quantum circuit 620 is equipped with a component 624 that performs a projective measurement of the auxiliary system 622.

The information processing device 100 sets the quantum state |ψ_in> represented by n_d qubits in the main system 621, as indicated by the above formula (3). The information processing device 100 sets the quantum state |x> represented by n_a qubits in the auxiliary system 622 to the random computational basis state represented by the following formula (12) and the above formula (10). The information processing device 100 time-evolves the input data for a time kΔt using the time-evolution operator U_DA of the cumulative Hamiltonian represented by the following formula (13).${⊗}_{i = 1}^{{n}_{a}} \left|{x}_{j}^{k - 1}\right〉$ (12) ${e}^{- iHkΔt}$ (13)

After time-evolving the input data, the information processing device 100 obtains a bit sequence z that follows the probability p_x(z) by performing a projective measurement of the auxiliary system 622 in the component 624. Based on the measurement result z=zj^k, the information processing device 100 identifies the pure quantum state |ψ_x(z_j^k)> induced in the main system 621 and uses the same as the quantum state |ψ_j^(k)> after transformation. This allows the information processing device 100 to complete the k-th stage in the forward diffusion process.

Specifically for k=K, the information processing device 100 configures the quantum circuit 630 to implement the K-th stage (for k=K) of the forward diffusion process. The quantum circuit 630 includes a main system 631 and an auxiliary system 632. The main system 631 is configured with the quantum dataset to be transformed. The auxiliary system 632 is configured with a randomly initialized quantum dataset. The quantum circuit 630 outputs the quantum data after randomization transformation of the main system 631 as the output 633. The quantum circuit 630 is equipped with a component 634 that performs a projective measurement of the auxiliary system 632.

The information processing device 100 sets the quantum state |ψ_in> represented by n_d qubits in the main system 631, as indicated by the above formula (3). The information processing device 100 sets the quantum state |x> represented by n_a qubits in the auxiliary system 632 to the random computational basis state represented by the following formula (14) and the above formula (10). The information processing device 100 time-evolves the input data for a time kΔt=KΔt using the time-evolution operator U_DA of the cumulative Hamiltonian represented by the following formula (15).${⊗}_{i = 1}^{{n}_{a}} \left|{x}_{j}^{K - 1}\right〉$ (14) ${e}^{- iHKΔt}$ (15)

After time-evolving the input data, the information processing device 100 obtains a bit sequence z that follows the probability p_x(z) by performing a projective measurement of the auxiliary system 632 in the component 634. Based on the measurement result z=z_j^k=z_j^K, the information processing device 100 identifies the pure quantum state |ψ_x(z_j^K)> induced in the main system 631 and uses the same as the quantum state |ψ_j^(K)> after transformation. The quantum state |ψ_j^(K)> follows a random distribution 602. This allows the information processing device 100 to complete the K-th stage (for k=K) in the forward diffusion process.

As described, the information processing device 100 implements the transformation operations at the respective stages in the forward diffusion process and thereby implements the forward diffusion process. The information processing device 100 reduces the number of quantum circuits 700 used to implement the forward diffusion process and thereby facilitates the implementation of the forward diffusion process. This facilitates the implementation of the QDDPM. For example, the information processing device 100 allows for reduction in the number of quantum circuits 700 to be configured for the entire QDDPM to K, regardless of the number N of quantum datasets.

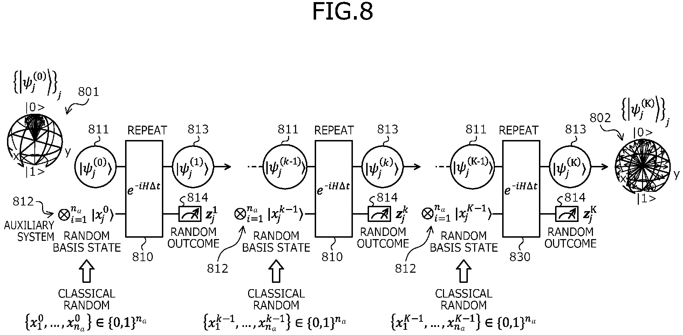

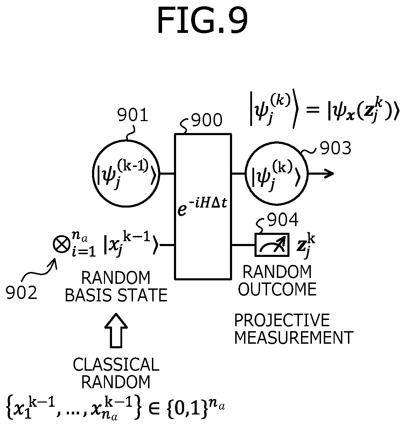

With reference to Figs. 8 and 9, a description is given of a second example of operation of the information processing device 100 to implement a QDDPM. In contrast to the first operation example, a second operation example is adapted for cases where the information processing device 100 repeatedly uses a quantum circuit that time-evolves the input data for a time Δt.

Figs. 8 and 9 are explanatory diagrams depicting the second operation example for implementing the QDDDM. In Fig. 8, the information processing device 100 obtains the time-evolution Δt and the number of diffusion steps K. The time-evolution Δt corresponds to the time for a single stage in the forward diffusion process. The number of diffusion steps K is the number of stages in the forward diffusion process. The forward diffusion process transforms a quantum dataset representing a quantum state that follows a target distribution 801 to a quantum dataset representing a quantum state that follows a random distribution 802.

The information processing device 100 obtains quantum datasets representing quantum states |ψ_j^ (0) > each following the target distribution 801 and to be subjected to the forward diffusion process. The information processing device 100 implements each stage in the forward diffusion process by configuring a quantum circuit to apply a time-evolution operator including a Hamiltonian H for a time Δt, and repeatedly applying the configured quantum circuit, where the Hamiltonian H is independent of time and k=1, ..., K.

Specifically, the information processing device 100 repeatedly applies the fixed time-evolution e^(-iHΔt) of the Hamiltonian H to the tensor product state between each quantum dataset set to the n_d-qubit main system and the random computational basis state set to the n_a-qubit auxiliary system. This enables the information processing device 100 to implement the forward diffusion process in an appropriate manner. Referring to Fig. 9, a description is then given of an example where the information processing device 100 uses the quantum circuit 900 to implement the k-th stage in the forward diffusion process.

As depicted in Fig. 9, the information processing device 100 configures a quantum circuit 900 to implement each stage in the forward diffusion process. The quantum circuit 900 includes a main system 901 and an auxiliary system 902. The main system 901 is configured with the quantum dataset to be transformed. The auxiliary system 902 is configured with a randomly initialized quantum dataset. The quantum circuit 900 outputs the quantum dataset after randomization transformation of the main system 901 as the output 903. The quantum circuit 900 is equipped with a component 904 that performs a projective measurement of the auxiliary system 902.

The information processing device 100 uses the quantum circuit 900 for the k-th stage in the forward diffusion process as described below. For example, for the k-th stage in the diffusion process, the information processing device 100 uses the quantum state |ψ_j^(k-1)> as the quantum state |ψ_in> represented by n_d qubits in the main system 901, as indicated by the following formula (16), where j=1, ..., N. The quantum state |ψ_j^ (k-1)> is the quantum state obtained by transforming the quantum state used as the main system 901 at the immediately preceding (k-1)-th stage. If k=1, the quantum state |ψ_j^ (k-1) > is the quantum state represented by a respective one of the obtained quantum datasets.$\left|{ψ}_{in}\right〉 = \left|{ψ}_{j}^{\left(k-1\right)}\right〉$ (16)

For the k-th stage in the forward diffusion process, the information processing device 100 sets the quantum state |x> represented by n_a qubits in the auxiliary system 902 to a random computational basis state represented by the following formulas (17) and (18). The information processing device 100 uses the tensor product state between the quantum state |ψ_in> and the quantum state |x> represented by the following formula (19) as the input data for the quantum circuit 900 for the k-th stage in the forward diffusion process.$\left|x\right〉 = {⊗}_{i = 1}^{{n}_{a}} \left|{x}_{j}^{k - 1}\right〉$ (17) $\left(\left\{{x}_{1}^{k - 1},…,{x}_{{n}_{a}}^{k - 1}\right\}∈{\left\{0, 1\right\}}^{{n}_{a}}\right)$ (18) $\left|{ψ}_{in}\right〉 ⊗ \left|x\right〉$ (19)

The information processing device 100 time-evolves the input data using the time-evolution operator U_DA of the cumulative Hamiltonian represented by the following formula (20). After time-evolving the input data, the information processing device 100 obtains a bit sequence z represented by the following formula (21), which follows the probability p_x(z), by performing a projective measurement of the auxiliary system 902 in the component 904. Based on the measurement result z=z_j^k, a pure quantum state |ψ_x(z_j^k)> is induced in the main system 901. The information processing device 100 identifies the pure quantum state |ψ_x(z_j^k)> induced in the main system 901 based on the measurement result z=zj^k as indicated by the following formula (22), and uses the same as the quantum state |ψ_j^k> after transformation.${U}_{DA} = {e}^{- iHΔt}$ (20) $z ∈ {\left\{0, 1\right\}}^{{n}_{a}}$ (21) $\left|{ψ}_{j}^{\left(k\right)}\right〉 = \left|{ψ}_{x}\left({z}_{j}^{k}\right)\right〉$ (22)

In some implementations, the information processing device 100 may include a quantum memory. In such implementations, the information processing device 100 preferably stores the quantum state |ψ_j^ (k)> after the current transformation in the quantum memory, in preparation for setting the main system 901 for the (k+1)-th stage in the forward diffusion process. In other implementations, the information processing device 100 may not include a quantum memory. In such implementations, the information processing device 100 may repeatedly use the quantum circuit 900 to generate the quantum state |ψ_j^ (k-1)> after transformation at the (k-1)-th stage in the forward diffusion process when setting the main system 901 for the k-th stage in the forward diffusion process.

This allows the information processing device 100 to achieve the transformation operation at the k-th stage in the forward diffusion process without setting the quantum circuit 900 with randomly selected parameters. The information processing device 100 facilitates making the quantum circuit 900 commonly available for the respective obtained quantum datasets and for the respective stages of the forward diffusion process. Therefore, the information processing device 100 allows for reduction in the number of quantum circuits 900 used to implement the forward diffusion process, thereby facilitating the implementation of the QDDPM. The description now returns to Fig. 8.

The implementation depicted in Fig. 8 assumes that the information processing device 100 configures the quantum circuit 810. The quantum circuit 810 includes a main system 811 and an auxiliary system 812, similarly to the quantum circuit 900. The main system 811 is configured with a quantum dataset to be transformed. The auxiliary system 812 is configured with a randomly initialized quantum dataset. The quantum circuit 810 outputs the quantum dataset after randomization transformation of the main system 811 as the output 813. The quantum circuit 810 is equipped with a component 814 that performs a projective measurement of the auxiliary system 812.

Specifically, for k=1, the information processing device 100 sets the quantum state |ψ_in> represented by n_d qubits in the main system 811 to the quantum state |ψ_j^(0)> represented by the quantum dataset, as indicated by the above formula (16). The information processing device 100 sets the quantum state |x> represented by n_a qubits in the auxiliary system 812 to a random computational basis state represented by the following formulas (23) and (24). The information processing device 100 time-evolves the input data for a time Δt using the time-evolution operator U_DA of the cumulative Hamiltonian represented by the following formula (25).${⊗}_{i = 1}^{{n}_{a}} \left|{x}_{j}^{0}\right〉$ (23) $\left\{{x}_{1}^{0},…,{x}_{{n}_{a}}^{0}\right\} ∈ {\left\{0, 1\right\}}^{{n}_{a}}$ (24) ${e}^{- iHΔt}$ (25)

After time-evolving the input data, the information processing device 100 obtains a bit sequence z that follows the probability p_x(z) by performing a projective measurement of the auxiliary system 812 in the component 814. The information processing device 100 identifies the pure quantum state |ψ_x(z_j^1)> induced in the main system 811 based on the measurement result z=z_j^k=z_j^1, and uses the same as the quantum state |ψ_j^(1)> after transformation. The information processing device 100 stores the quantum state |ψ_j^(1)> after transformation in a quantum memory. This allows the information processing device 100 to complete the first stage (for k=1) of the forward diffusion process.

Specifically, for 1<k<K, the information processing device 100 refers to the quantum memory and sets the quantum state |ψ_in> represented by n_d qubits in the main system 811 to the quantum state |ψ_j^(k-1)> represented by the quantum dataset, as indicated in the above formula (16). The information processing device 100 sets the quantum state |x> represented by n_a qubits in the auxiliary system 812 to the random computational basis state represented by the following formulas (26) and (27). The information processing device 100 time-evolves the input data for a time Δt using the time-evolution operator U_DA of the fixed Hamiltonian represented by the above formula (25). ${⊗}_{i = 1}^{{n}_{a}} \left|{x}_{j}^{k - 1}\right〉$ (26) $\left\{{x}_{1}^{k - 1},…,{x}_{{n}_{a}}^{k - 1}\right\} ∈ {\left\{0, 1\right\}}^{{n}_{a}}$ (27)

After time-evolving the input data, the information processing device 100 obtains a bit sequence z that follows the probability p_x(z) by performing a projective measurement of the auxiliary system 812 in the component 814. Based on the measurement result z=zj^k, the information processing device 100 identifies the pure quantum state |ψ_x(z_j^k)> induced in the main system 811 and uses the same as the quantum state |ψ_j^(k)> after transformation. The information processing device 100 stores the quantum state |ψ_j^(k)> after transformation in the quantum memory. This allows the information processing device 100 to complete the k-th stage in the forward diffusion process.

Specifically, for k=K, the information processing device 100 refers to the quantum memory and sets the quantum state |ψ_in> represented by n_d qubits in the main system 811 to the quantum state |ψ_j^(K-1)> represented by the quantum dataset, as indicated by the above formula (16). The information processing device 100 sets the quantum state |x> represented by n_a qubits in the auxiliary system 812 to the random computational basis state represented by the following formulas (28) and (29). The information processing device 100 time-evolves the input data for a time Δt using the time-evolution operator U_DA of the fixed Hamiltonian represented by the above formula (25).${⊗}_{i = 1}^{{n}_{a}} \left|{x}_{j}^{K - 1}\right〉$ (28) $\left\{{x}_{1}^{K - 1},…,{x}_{{n}_{a}}^{K - 1}\right\} ∈ {\left\{0, 1\right\}}^{{n}_{a}}$ (29)

After time-evolving the input data, the information processing device 100 obtains a bit sequence z that follows the probability p_x(z) by performing a projective measurement of the auxiliary system 812 in the component 814. Based on the measurement result z=zj^k, the information processing device 100 identifies the pure quantum state |ψ_x(z_j^k)> induced in the main system 811 and uses the same as the quantum state |ψ_j^(k)> after transformation. This allows the information processing device 100 to complete the K-th stage of the forward diffusion process.

As described, the information processing device 100 implements the transformation operations at the respective stages in the forward diffusion process and thereby implements the forward diffusion process. The information processing device 100 reduces the number of quantum circuits 900 used to implement the forward diffusion process and thereby facilitates the implementation of the forward diffusion process. This facilitates the implementation of a QDDPM. For example, the information processing device 100 allows for reduction in the number of quantum circuits 900 to be configured for the entire QDDPM to one, regardless of the number N of quantum datasets.

As described above, the information processing device 100 uses one or more quantum circuits 700 or 900 to implement the transformation operations at the respective stages in the forward diffusion process. For example, the information processing device 100 allows the ensemble of the quantum states to approximate a Haar-random distribution by appropriately setting the auxiliary system, the Hamiltonian H, the time-evolution Δt, and the number of diffusion steps K. The quantum state after transformation at each stage in the forward diffusion process transitions as indicated by the following formula (30), thereby approximating the Haar-random distribution.${\left\{\left|{ψ}_{j}^{\left(0\right)}\right〉\right\}}_{j} \to {\left\{\left|{ψ}_{j}^{\left(1\right)}\right〉\right\}}_{j} \to ⋯ \to {\left\{\left|{ψ}_{j}^{\left(K\right)}\right〉\right\}}_{j}$ (30)

Specifically, the information processing device 100 sets the auxiliary system to a random quantum state that follows a classical probability distribution q(x). Specifically, the information processing device 100 sets the Hamiltonian H to a chaotic Hamiltonian. The chaotic Hamiltonian is a type of Hamiltonian that induces quantum chaos in a quantum system. The chaotic Hamiltonian causes the quantum state to become ergodic after relatively long-term time-evolution, resulting in the quantum state spreading throughout the entire Hilbert space. This enables the information processing device 100 to achieve the transformation operations at the respective stages in the forward diffusion process while reducing the number of quantum circuits 700 or 900.

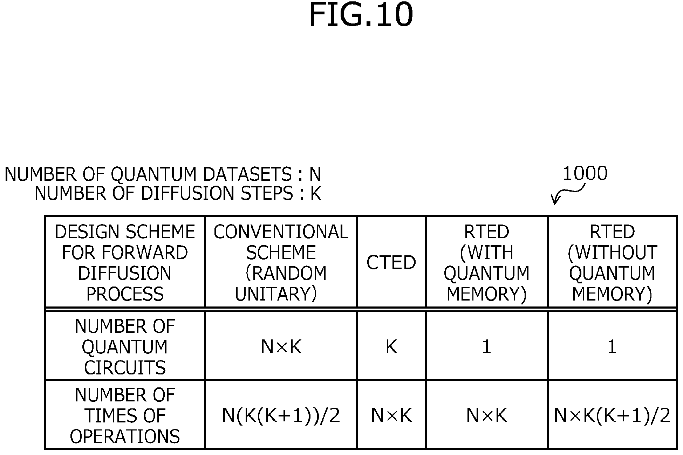

With reference to Fig. 10, an example of an effect achieved by the information processing device 100 is described.

Fig. 10 is an explanatory diagram depicting an example of an effect. Fig. 10 depicts the results of comparing the proposed implementation scheme for the forward diffusion process by the information processing device 100 and a conventional scheme. The conventional scheme configures a random quantum circuit for each stage in the forward diffusion process and for each quantum dataset to be subjected to the forward diffusion process. Here, the number of diffusion steps is denoted by K, and the number of quantum datasets is denoted by N.

The proposed method includes three approaches: cumulative time-evolution diffusion in relation to the first operation example, repeated time-evolution diffusion that uses a quantum memory in relation to the second operation example, and repeated time-evolution diffusion that does not use any quantum memory. In the following description, the cumulative time-evolution diffusion may be referred to as "CTED", and the repeated time-evolution diffusion may be referred to as "RTED".

Table 1000 depicts the number of quantum circuits to be configured and the number of times the quantum circuits are operated in implementing the forward diffusion process in the proposed scheme, and the number of quantum circuits to be configured and the number of times the quantum circuits are operated in implementing the forward diffusion process in the conventional scheme. In the conventional scheme, as depicted in Table 1000, the number of random quantum circuits to be configured is N×K, and the total number of times the random quantum circuits are operated is N(1+2+ ..., +K)=N(K(K+1))/2.

In contrast, in the proposed CTED scheme, the number of quantum circuits 700 to be configured is K, and the total number of times the quantum circuits 700 are operated is N×K, as depicted in table 1000. As discussed above, the proposed CTED scheme allows for the reduction in the number of quantum circuits 700 to be configured, facilitating the implementation of the forward diffusion process. This facilitates the implementation of a QDDPM.

Further, in the proposed RTED scheme that uses a quantum memory, the number of quantum circuits 900 to be configured is one, and the number of times the quantum circuit 900 is operated is N×K, as depicted in Table 1000. As discussed above, the proposed RTED scheme that uses a quantum memory allows for the reduction in the number of quantum circuits 900 to be configured, facilitating the implementation of the forward diffusion process. This facilitates the implementation of a QDDPM.

Further, in the proposed RTED scheme that does not use any quantum memory, the number of quantum circuits 900 to be configured is one, and the number of times the quantum circuit 900 is operated is N×K(K+1)/2 as depicted in Table 1000. As discussed above, the proposed RTED scheme that does not use any quantum memory allows for the reduction in the number of quantum circuits 900 to be configured, facilitating the implementation of the forward diffusion process. This facilitates the implementation of a QDDPM.

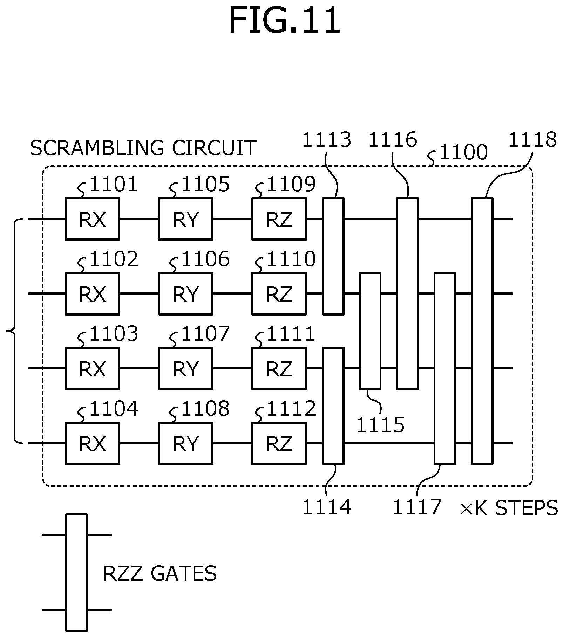

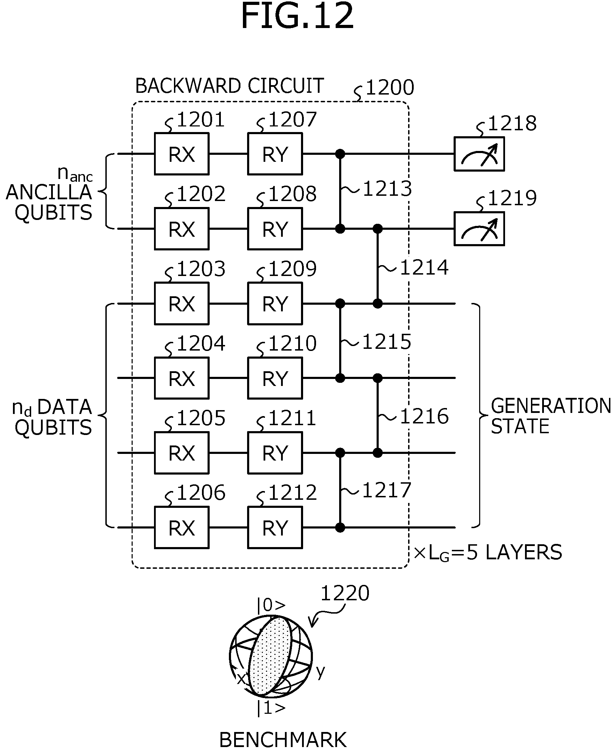

With reference to Figs. 11 to 19, a description is given of examples of implementation of the information processing device 100. First, specific examples of quantum circuits for implementing a QDDMP according to a conventional scheme are described with reference to Figs. 11 and 12. Specifically, the quantum circuits according to the conventional scheme include a quantum circuit representing the transformation operation at each stage in the forward diffusion process and a variational quantum circuit representing the transformation operation at each stage in the reverse diffusion process.

Figs. 11 and 12 are explanatory diagrams depicting specific examples of quantum circuits according to the conventional scheme for implementing a QDDPM. Specifically, Fig. 11 depicts a specific example of a quantum circuit 1100 representing the transformation operation at each stage in the forward diffusion process. The quantum circuit 1100 represents the operations performed on n_d qubits. In the example of Fig. 11, n_d=4.

The quantum circuit 1100 includes, for example, RX gates 1101 to 1104, RY gates 1105 to 1108, RZ gates 1109 to 1112, and RZZ gates 1113 to 1118. The number of quantum circuits 1100 to be configured is, for example, N×K.

The operation of the RX gates 1101 to 1104 is defined by the following formula (31). The operation of the RY gates 1105 to 1108 is defined by the following formula (32). The operation of the RZ gates 1109 to 1112 is defined by the following formula (33). The operation of the RZZ gates 1113 to 1118 is defined by the following formula (34).$RX \left(h\right) = exp \left(-i\frac{h}{2}X\right) = \left(\begin{matrix}cos \left(\frac{h}{2}\right) & - isin \left(\frac{h}{2}\right) \\ - isin \left(\frac{h}{2}\right) & cos \left(\frac{h}{2}\right)\end{matrix}\right)$ (31) $RY \left(h\right) = exp \left(-i\frac{h}{2}Y\right) = \left(\begin{matrix}cos \left(\frac{h}{2}\right) & - sin \left(\frac{h}{2}\right) \\ sin \left(\frac{h}{2}\right) & cos \left(\frac{h}{2}\right)\end{matrix}\right)$ (32) $RZ \left(h\right) = exp \left(-i\frac{h}{2}Z\right) = \left(\begin{matrix}{e}^{- i \frac{h}{2}} & 0 \\ 0 & {e}^{i \frac{h}{2}}\end{matrix}\right)$ (33) $RZZ \left(h\right) = exp \left(-i\frac{h}{2}Z⊗Z\right) = \left(\begin{matrix}\begin{matrix}{e}^{- i \frac{h}{2}} & 0 \\ 0 & {e}^{- i \frac{h}{2}}\end{matrix} & \begin{matrix}0 & 0 \\ 0 & 0\end{matrix} \\ \begin{matrix}0 & 0 \\ 0 & 0\end{matrix} & \begin{matrix}{e}^{- i \frac{h}{2}} & 0 \\ 0 & {e}^{- i \frac{h}{2}}\end{matrix}\end{matrix}\right)$ (34)

Fig. 12 depicts a specific example of a quantum circuit 1200 representing the transformation operation at each stage in the reverse diffusion process. The quantum circuit 1200 is a variational quantum circuit. The quantum circuit 1200 represents the operations performed on n_d quantum bits and n_a auxiliary bits. In the example of Fig. 12, n_d=4 and n_a=2. The quantum circuit 1200 includes, for example, L_G combinations, each of which includes RX gates 1201 to 1206, RY gates 1207 to 1212, and CZ gates 1213 to 1217. The operation of the CZ gates 1213 to 1217 is defined by the following formula (35). ${CZq}_{0} , {q}_{1} = I ⊗ \left|0\right〉 \left〈0\right| + Z ⊗ \left|1\right〉 \left〈1\right| = \left(\begin{matrix}1 & 0 & 0 & 0 \\ 0 & 1 & 0 & 0 \\ 0 & 0 & 1 & 0 \\ 0 & 0 & 0 & - 1\end{matrix}\right)$ (35)

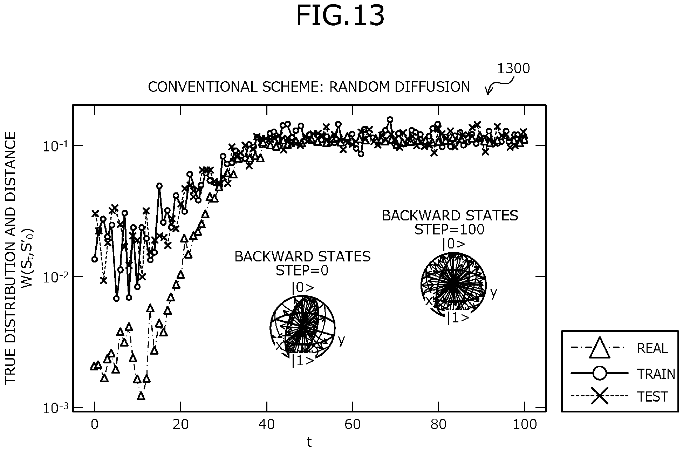

Next, a specific example of a quantum circuit implementing the proposed scheme for implementing a QDDPM is described. The quantum circuits according to the proposed scheme include the above-described quantum circuits 700 or 900, which implement the forward diffusion process, and the quantum circuits 1200, which are similar to those used in the conventional scheme. The following describes specific example effects achieved by the information processing device 100, based on a comparison between an example of the conventional scheme and an example of the proposed scheme, with respect to a benchmark case where quantum datasets representing quantum states that follow a circular distribution 1220 are subject to the forward diffusion process. For example, specific example effects achieved by the information processing device 100 are described with reference to Figs. 13 to 19.

Figs. 13, 14, 15, 16, 17, 18, and 19 are explanatory diagrams depicting specific example effects. In the examples depicted in Figs. 13 to 19, the Hamiltonian used by the information processing device 100 is assumed to be the chaotic Hamiltonian represented by the following formula (36). The Hamiltonian represented by the following formula (36) is understood as being time-independent because that Hamiltonian does not have a time term, where L=2, J=1.0, h_x=0.8090, and h_y=0.9045.$H = {\sum }_{i = 1}^{L} \left({h}_{x}{X}_{i}+{h}_{y}{Y}_{i}+{JX}_{i}{X}_{i + 1}\right)$ (36)

It is assumed that the auxiliary system is configured with a random input that follows a uniform distribution q(x), where the time evolution is Δt and the number of diffusion steps is K. The number of qubits n_a in the auxiliary system is assumed to be equal to the number of qubits n_d in the main system. The description now proceeds to Figs. 13 to 15.

In the examples depicted Figs. 13 to 15, specifically, n_a=n_d=1, Δt=0.05, and k=100. A graph 1300 in Fig. 13 depicts the change in distance from the true distribution with respect to the degree of randomization t in an example of the conventional scheme. The true distribution corresponds to the circular distribution 1220 described above, and t corresponds to the number of stages from the beginning of the forward diffusion process.

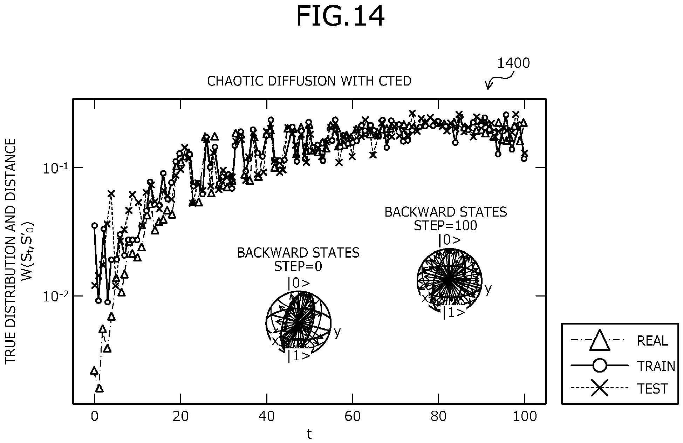

In graph 1300, the symbols "Δ" represent transitions of the quantum datasets that follow the true distribution during the forward diffusion process. The symbols "∘" represent transitions of the random quantum datasets used in training the reverse diffusion process, and the symbols "×" represent transitions of random quantum datasets used in testing the reverse diffusion process. The description then proceeds to Fig. 14.

A graph 1400 in Fig. 14 depicts the change in distance from the true distribution with respect to the degree of randomization t in an implementation example of the proposed CTED scheme. The true distribution corresponds to the circular distribution 1220 described above, and t corresponds to the number of stages from the beginning of the forward diffusion process.

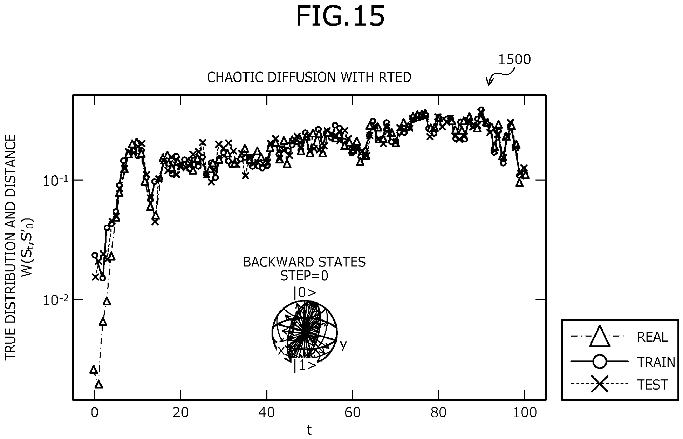

In graph 1400, the symbols "Δ" represent transitions of the quantum datasets that follow the true distribution during the forward diffusion process. The symbols "o" represent transitions of the random quantum data used in training the reverse diffusion process, and the symbols "×" represent transitions of the random quantum data used in testing the reverse diffusion process. The description then proceeds to Fig. 15.

A graph 1500 in Fig. 15 depicts the change in distance from the true distribution with respect to the degree of randomization t in an implementation example of the proposed RTED scheme. The true distribution corresponds to the circular distribution 1220 described above, and t corresponds to the number of stages from the beginning of the forward diffusion process.

In the graph 1500, the symbols "Δ" represent transitions of the quantum datasets that follow the true distribution during the forward diffusion process. The symbols "∘" represent transitions of the random quantum datasets used in training the reverse diffusion process, and the symbols "×" represent transitions of the random quantum datasets used in testing the reverse diffusion process.

As depicted in graphs 1300 and 1400, the proposed CTED scheme allows the distribution of quantum states represented by the quantum datasets to approximate the true distribution during the reverse diffusion process, as is the case with the conventional scheme. Therefore, the proposed CTED scheme allows for reduction in the number of quantum circuits to be configured in comparison to the conventional scheme, while maintaining the accuracy of the reverse diffusion process.

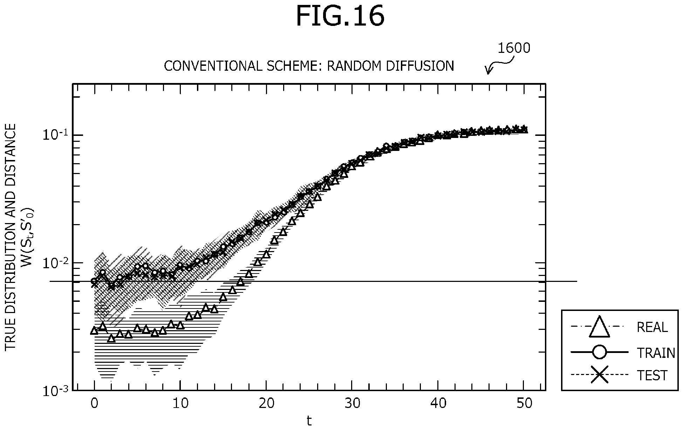

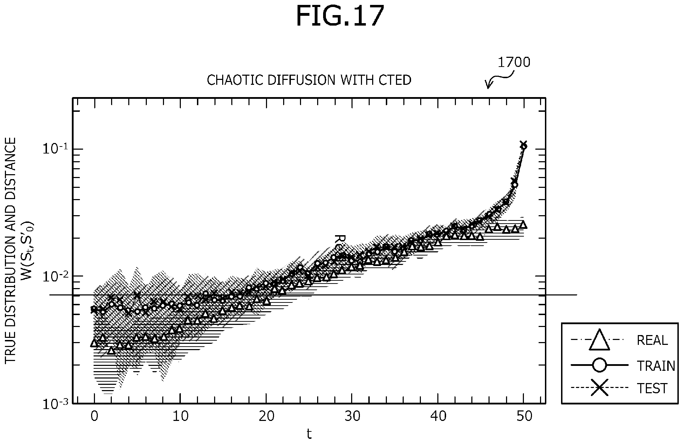

As depicted in graphs 1300 and 1500, the proposed RTED scheme allows the distribution of quantum states represented by the quantum datasets to approximate the true distribution during the reverse diffusion process as is the case with the conventional scheme. Therefore, the proposed RTED scheme allows for reduction in the number of quantum circuits to be configured in comparison to the conventional scheme, while maintaining the accuracy of the reverse diffusion process. The description then proceeds to Figs. 16 and 17.

In the examples depicted in Figs. 16 and 17, specifically, n_a=n_d=1, Δt=0.01, and K=50. A graph 1600 in Fig. 16 depicts the change in distance from the true distribution with respect to the degree of randomization t in an example of the conventional scheme. The true distribution corresponds to the circular distribution 1220 described above, and t corresponds to the number of stages from the beginning of the forward diffusion process.

In graph 1600, the symbols "Δ" represent transitions of the quantum datasets that follow the true distribution during the forward diffusion process. The symbols "∘" represent transitions of the random quantum datasets used in training the reverse diffusion process, and the symbols "×" represent transitions of random quantum datasets used in testing the reverse diffusion process. The description then proceeds to Fig. 17.

A graph 1700 in Fig. 17 depicts the change in distance from the true distribution with respect to the degree of randomization t in an implementation example of the proposed CTED scheme. The true distribution corresponds to the circular distribution 1220 described above, and t corresponds to the number of stages from the beginning of the forward diffusion process.

In graph 1700, the symbols "Δ" represent transitions of the quantum datasets that follow the true distribution during the forward diffusion process. The symbols "∘" represent transitions of the random quantum datasets used in training the reverse diffusion process, and the symbols "×" represent transitions of the random quantum datasets used in testing the reverse diffusion process.

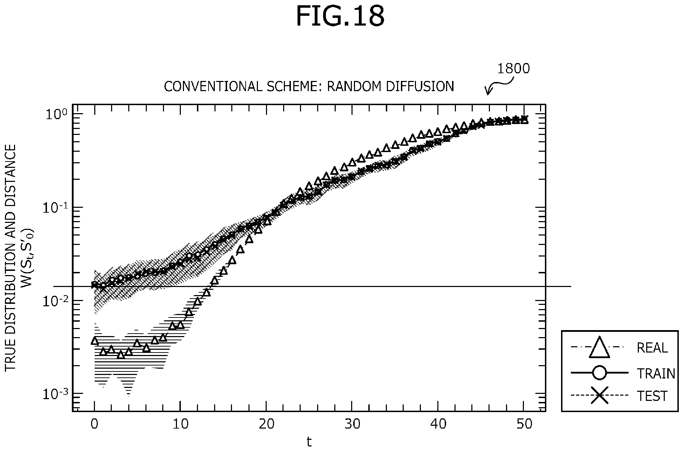

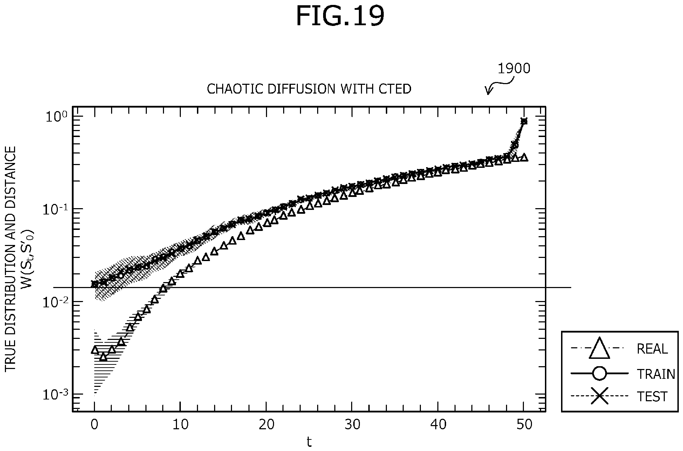

As depicted in the graphs 1600 and 1700, the proposed CTED scheme allows the distribution of quantum states represented by the quantum datasets to approximate the true distribution during the reverse diffusion process as is the case with the conventional scheme. Therefore, the proposed CTED scheme allows for reduction in the number of quantum circuits to be configured in comparison to the conventional scheme, while maintaining the accuracy of the reverse diffusion process. The description then proceeds to Figs. 18 and 19.

In the examples depicted in Figs. 18 and 19, specifically, n_a=n_d=4, Δt=0.01, and K=50. A graph 1800 in Fig. 18 depicts the change in distance from the true distribution with respect to the degree of randomization t in an example of the conventional scheme. The true distribution corresponds to the circular distribution 1220 described above, and t corresponds to the number of stages from the beginning of the forward diffusion process.

In graph 1800, the symbols "Δ" represent transitions of the quantum datasets that follow the true distribution during the forward diffusion process. The symbols "o" represent transitions of the random quantum data used in training the reverse diffusion process, and the symbols "×" represent transitions of the random quantum data used in testing the reverse diffusion process. The description then proceeds to Fig. 19.

A graph 1900 in Fig. 19 depicts the change in distance from the true distribution with respect to the degree of randomization t in an example implementation of the proposed CTED scheme. The true distribution corresponds to the circular distribution 1220 described above, and t corresponds to the number of stages from the beginning of the forward diffusion process.

In graph 1900, the symbols "Δ" represent transitions of the quantum datasets that follow the true distribution during the forward diffusion process. The symbols "∘" represent transitions of the random quantum datasets used in training the reverse diffusion process, and the symbols "×" represent transitions of the random quantum datasets used in testing the reverse diffusion process.

As depicted in the graphs 1800 and 1900, the proposed CTED scheme allows the distribution of quantum states represented by the quantum datasets to approximate the true distribution during the reverse diffusion process as is the case with the conventional scheme. Therefore, the proposed CTED scheme allows for reduction in the number of quantum circuits to be configured in comparison to the conventional scheme, while maintaining the accuracy of the reverse diffusion process.

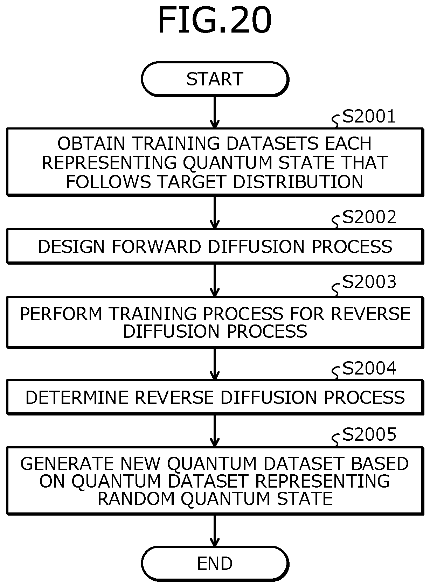

With reference to Fig. 20, an example of a procedure of an overall process performed by the information processing device 100 is described. The overall process is implemented, for example, by the CPU 301, storage areas such as the memory 302 and recording medium 305, and the network I/F 303 depicted in Fig. 3.

Fig. 20 is a flowchart depicting an example of a procedure of the overall process. In Fig. 20, the information processing device 100 obtains training datasets, each representing a quantum state that follows a target distribution (step S2001). The information processing device 100 then configures the forward diffusion process (step S2002).

The information processing device 100 then performs a training process for the reverse diffusion process (step S2003). The information processing device 100 then determines the reverse diffusion process based on the processing results of the training process (step S2004). The information processing device 100 then generates a new quantum dataset based on a quantum dataset representing a random quantum state (step S2005). This completes the overall process by the information processing device 100.

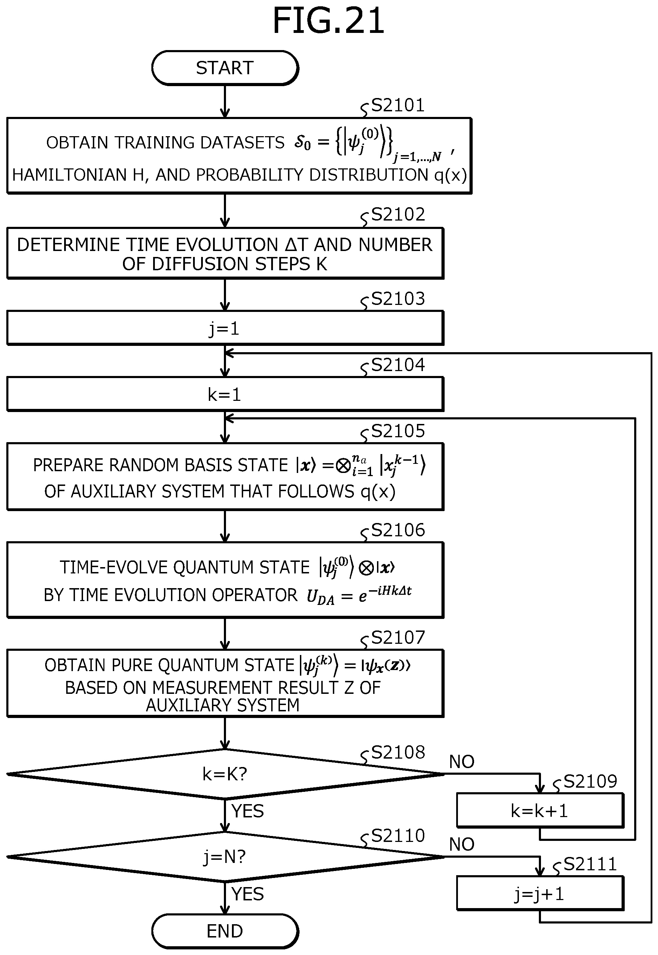

With reference to Fig. 21, an example of a procedure of a first forward diffusion process performed by the information processing device 100 is described. The first forward diffusion process is implemented, for example, by the CPU 301, storage areas such as the memory 302 and recording medium 305, and the network I/F 303 depicted in Fig. 3. Specifically, the first forward diffusion process corresponds to the CTED described above.

Fig. 21 is a flowchart depicting an example of a procedure of the first forward diffusion process. In Fig. 21, the information processing device 100 obtains training datasets S₀ represented by the following formula (37), a Hamiltonian H, and a probability distribution q(x) (step S2101).${S}_{0} = {\left\{\left|{ψ}_{j}^{\left(0\right)}\right〉\right\}}_{j = 1 , … , N}$ (37)

The information processing device 100 then determines the time-evolution Δt and the number of diffusion steps K (step S2102). The information processing device 100 then sets j to 1 (step S2103). The information processing device 100 then proceeds to the process at step S2104.

At step S2104, the information processing device 100 sets k to 1 (step S2104). The information processing device 100 then prepares a random basis state |x> of the auxiliary system that follows q(x), as represented by the following formula (38) (step S2105).$\left|x\right〉 = {⊗}_{i = 1}^{{n}_{a}} \left|{x}_{j}^{k - 1}\right〉$ (38)

The information processing device 100 then time-evolves the quantum state represented by the following formula (39) using the time-evolution operator U_DA represented by the following formula (40) (step S2106). The information processing device 100 then obtains a pure quantum state |ψ_j^ (k) > of the main system represented by the following formula (41) based on the measurement result z of the auxiliary system (step S2107).$\left|{ψ}_{j}^{\left(0\right)}\right〉 ⊗ \left|x\right〉$ (39) ${U}_{DA} = {e}^{- iHkΔt}$ (40) $\left|{ψ}_{j}^{\left(k\right)}\right〉 = \left|{ψ}_{x}\left(z\right)\right〉$ (41)

The information processing device 100 then determines whether k=K (step S2108). If k=K (step S2108: NO), the information processing device 100 sets k to k+1 (step S2109) and returns to the process at step S2105. When k=K (step S2108: YES), the information processing device 100 proceeds to the process at step S2110.

At step S2110, the information processing device 100 determines whether j=N (step S2110). When j=N (step S2110: NO), the information processing device 100 sets j to j+1 (step S2111) and returns to the process at step S2104. When j=N (step S2110: YES), the information processing device 100 terminates the first forward diffusion process.

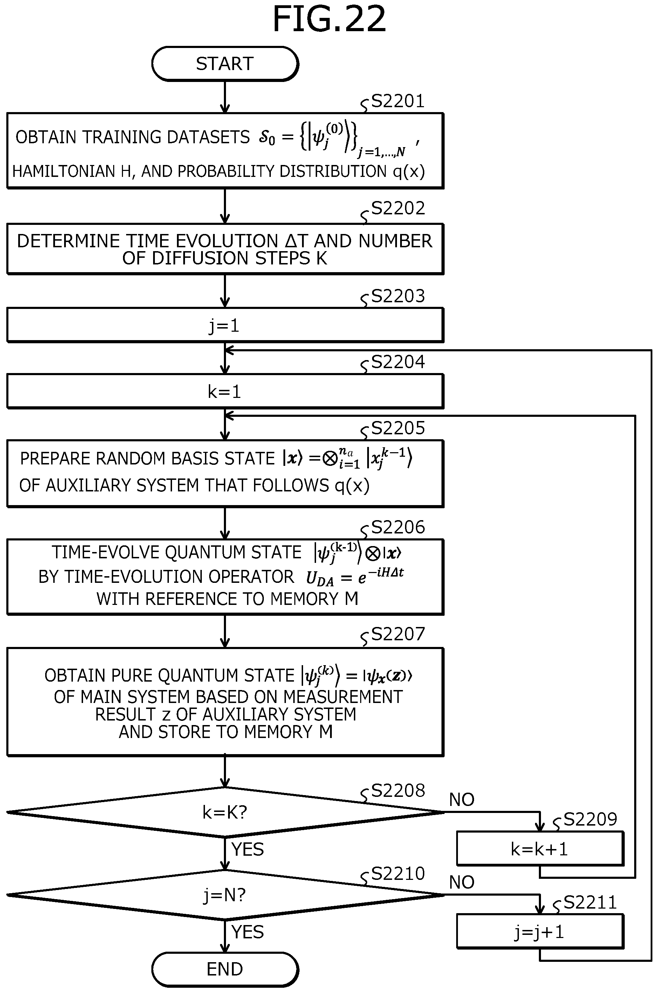

With reference to Fig. 22, an example of a procedure of a second diffusion process performed by the information processing device 100 is described. The second diffusion processing is implemented, for example, by the CPU 301, storage areas such as the memory 302 and recording medium 305, and the network I/F 303 depicted in Fig.3. Specifically, the second diffusion process corresponds to the above-described RTED that uses the quantum memory.

Fig. 22 is a flowchart depicting an example of a procedure of the second forward diffusion process. In Fig. 22, the information processing device 100 obtains training datasets S₀ represented by the following formula (42), a Hamiltonian H, and a probability distribution q(x) (step S2201).${S}_{0} = {\left\{\left|{ψ}_{j}^{\left(0\right)}\right〉\right\}}_{j = 1 , … , N}$ (42)

The information processing device 100 then determines the time-evolution Δt and the number of diffusion steps K (step S2202). The information processing device 100 then sets j to 1 (step S2203). The information processing device 100 then proceeds to the process at step S2204.

At step S2204, the information processing device 100 sets k to 1 (step S2204). The information processing device 100 then prepares a random basis state |x> of the auxiliary system that follows q(x), as represented by the following formula (43) (step S2205).$\left|x\right〉 = {⊗}_{i = 1}^{{n}_{a}} \left|{x}_{j}^{k - 1}\right〉$ (43)

The information processing device 100 then time-evolves, with reference to a memory M, the quantum state represented by the following formula (44) using the time-evolution operator U_DA represented by the following formula (45) (step S2206). The information processing device 100 then obtains a pure quantum state |ψ_j^ (k)> of the main system represented by the following formula (46) based on the measurement result z of the auxiliary system and stores the pure quantum state |ψ_j^ (k)> in the memory M (step S2207).$\left|{ψ}_{j}^{\left(k-1\right)}\right〉 = \left|x\right〉$ (44) ${U}_{DA} = {e}^{- iHΔt}$ (45) $\left|{ψ}_{j}^{\left(k\right)}\right〉 = \left|{ψ}_{x}\left(z\right)\right〉$ (46)

The information processing device 100 then determines whether k=K (step S2208). When k=K (step S2208: NO), the information processing device 100 sets k to k+1 (step S2209) and returns to the process at step S2205. When k=K (step S2208: YES), the information processing device 100 proceeds to the process at step S2210.

At step S2210, the information processing device 100 determines whether j=N (step S2210). When j=N (step S2210: NO), the information processing device 100 sets j to j+1 (step S2211) and returns to the process at step S2204. When j=N (step S2210: YES), the information processing device 100 terminates the second forward diffusion process.

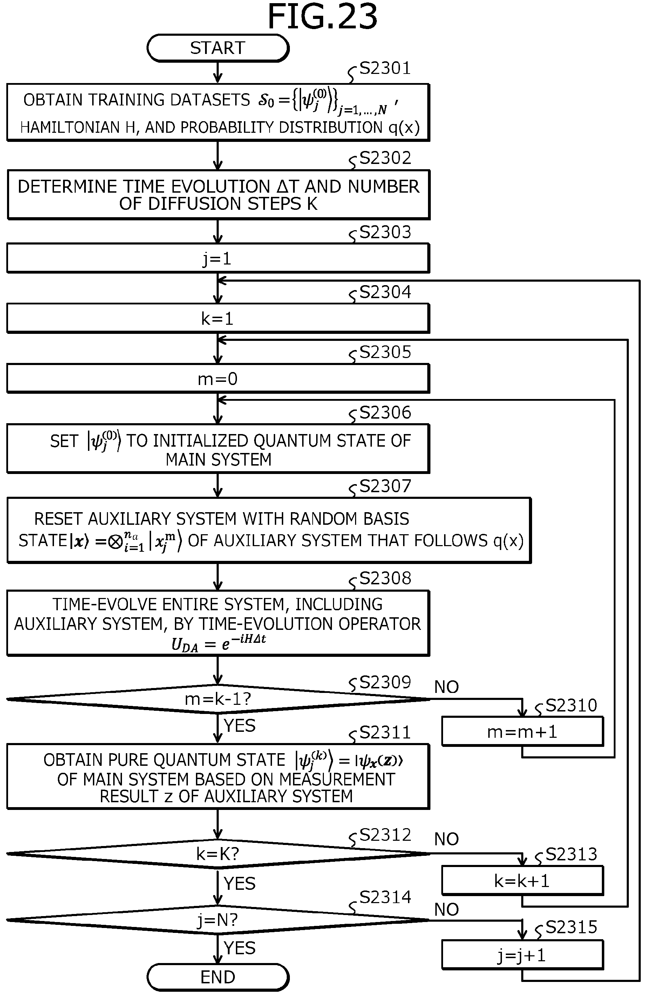

With reference to Fig. 23, an example of a procedure of a third forward diffusion process performed by the information processing device 100 is described. The third diffusion process is implemented, for example, by the CPU 301, storage areas such as the memory 302 and recording medium 305, and the network I/F 303 depicted in Fig.3. Specifically, the third diffusion process corresponds to the above-described RTED that does not use any quantum memory.

Fig. 23 is a flowchart depicting an example of a procedure of the third forward diffusion process. In Fig. 23, the information processing device 100 obtains training datasets S₀ represented by the following formula (47), a Hamiltonian H, and a probability distribution q(x) (step S2301).${S}_{0} = {\left\{\left|{ψ}_{j}^{\left(0\right)}\right〉\right\}}_{j = 1 , … , N}$ (4)

The information processing device 100 then determines the time-evolution Δt and the number of diffusion steps K (step S2302). The information processing device 100 then sets j to 1 (step S2303). The information processing device 100 then proceeds to the process at step S2304.

At step S2304, the information processing device 100 sets k to 1 (step S2304). The information processing device 100 then sets m to 0 (step S2305). The information processing device 100 then sets |ψ_j^(0)> to an initialized quantum state of the main system (step S2306).

Next, the information processing device 100 resets the auxiliary system with a random basis state |x> of the auxiliary system that follows q(x) represented by the following formula (48) (step S2307). Then, the information processing device 100 time-evolves the entire system, including the auxiliary system, using the time-evolution operator U_DA represented by the following formula (49) (step S2308).$\left|x\right〉 = {⊗}_{i = 1}^{{n}_{a}} \left|{x}_{j}^{m}\right〉$ (48) ${U}_{DA} = {e}^{- iHΔt}$ (49)

The information processing device 100 then determines whether m=k - 1 (step S2309). When m=k - 1 (step S2309: NO), the information processing device 100 sets m to m + 1 (step S2310) and returns to the process at step S2306. When m=k - 1 (step S2309: YES), the information processing device 100 proceeds to the process at step S2311.

At step S2311, the information processing device 100 obtains a pure quantum state |ψ_j^ (k)> of the main system represented by the following formula (50), based on the measurement result z of the auxiliary system (step S2311).$\left|{ψ}_{j}^{\left(k\right)}\right〉 = \left|{ψ}_{x}\left(z\right)\right〉$ (50)

The information processing device 100 then determines whether k=K (step S2312). When k=K (step S2312: NO), the information processing device 100 sets k to k+1 (step S2313) and returns to the process at step S2305. When k=K (step S2312: YES), the information processing device 100 proceeds to the process at step S2314.

At step S2314, the information processing device 100 determines whether j=N (step S2314). When j=N (step S2314: NO), the information processing device 100 sets j to j+1 (step S2315) and returns to the process at step S2304. When j=N (step S2314: YES), the information processing device 100 terminates the third forward diffusion process.

The information processing device 100 may perform some of the steps depicted in the flowcharts of Figs. 20 to 23 in a different order. The information processing device 100 may omit some of the steps depicted in the flowcharts of Figs. 20 to 23.

The information processing device 100 may be applied, for example, to various fields, such as drug discovery, materials development, and understanding quantum systems. The information processing device 100 is applied when generation of quantum datasets following a target distribution is desired to implement a QDDPM in each field.

As described above, the information processing device 100 facilitates obtaining first datasets each representing a quantum state that follows a target distribution for application to a forward diffusion process that progressively transforms a quantum dataset representing a quantum state to randomize the quantum dataset. The information processing device 100 facilitates configuring a quantum circuit that specifies applying a time-evolution operator including a time-independent Hamiltonian to a many-body system including a main system and an auxiliary system and subsequently performing a projective measurement of the auxiliary system. The information processing device 100 facilitates transforming each of the obtained first datasets up to a predetermined stage of the forward diffusion process to randomize each first dataset, using the configured quantum circuit. This allows the information processing device 100 to reduce the number of quantum circuits used to implement the forward diffusion process, facilitating the implementation of the forward diffusion process. This facilitates the implementation of the QDDPM.

The information processing device 100 facilitates configuring a quantum circuit that specifies applying a time-evolution operator containing a Hamiltonian to the many-body system for the time corresponding to each stage of the forward diffusion process and subsequently performing a projective measurement of the auxiliary system. The information processing device 100 facilitates transforming each first dataset up to each stage of the forward diffusion process to randomize each first dataset by applying the main system of the quantum circuit configured for that stage to each first dataset. This allows the information processing device 100 to reduce the number of quantum circuits used to implement the forward diffusion process, thus facilitating the implementation of the forward diffusion process. This facilitates the implementation of the QDDPM. The information processing device 100 allows for reduction in the number of used quantum circuits down to the number of stages in the forward diffusion process.

The information processing device 100 facilitates configuring a quantum circuit that specifies applying a time-evolution operator including a Hamiltonian to the many-body system for a time corresponding to a single stage and subsequently performing a projective measurement of the auxiliary system. The information processing device 100 facilitates transforming each first dataset up to each stage of the forward diffusion process to randomize each first dataset by repeatedly applying the main system of the configured quantum circuit to each first dataset the number of times corresponding to that stage. This allows the information processing device 100 to reduce the number of quantum circuits used to implement the forward diffusion process, thus facilitating the implementation of the forward diffusion process. This facilitates the implementation of a QDDPM. The information processing device 100 facilitates reducing the number of used quantum circuits down to one.

The information processing device 100 facilitates randomly initializing the auxiliary system of the quantum circuit. This enables the information processing device 100 to accurately implement the forward diffusion process, even when the auxiliary system has a relatively small number of qubits.

The information processing device 100 facilitates obtaining second datasets each representing a random quantum state for application to the reverse diffusion process that progressively transforms a quantum dataset representing a quantum state to follow the target distribution. The information processing device 100 facilitates sequentially selecting, from the beginning of the reverse diffusion process, combinations of the respective stages of the reverse diffusion process and corresponding stages of the forward diffusion process. The information processing device 100 facilitates training, each time a combination is selected, a variational quantum circuit representing the operation at the stage in the reverse diffusion process relevant to that combination. This allows the information processing device 100 to train the reverse diffusion process to implement a QDDPM.

The information processing method described in the present embodiment may be implemented by executing a prepared program on a computer such as a personal computer and a workstation. The program is stored on a non-transitory, computer-readable recording medium such as a hard disk, a flexible disk, a compact disc read-only memory (CD-ROM), a magneto-optical (MO) disc, and a digital versatile disc (DVD), read out from the computer-readable medium, and executed by the computer. The program may be distributed through a network such as the Internet.

In one aspect, the implementation of a quantum denoising diffusion probabilistic model is facilitated.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the scope of the claims.
In any of the above aspects, the various features may be implemented in hardware, or as software modules running on one or more processors/computers.
The present disclosure also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program may be stored on a non-transitory computer-readable medium, or it could, for example, be in the form of a signal such as a downloadable data signal provided from an Internet website, or it could be in any other form.

## Claims

1. An information processing program for causing a computer to execute a process, the process comprising:
obtaining a plurality of first datasets each representing a quantum state that follows a target distribution, the plurality of first datasets to be subjected to a forward diffusion process that transforms, in stages, a quantum dataset representing a quantum state, to randomize the quantum dataset; and
transforming each of the obtained plurality of first datasets, using a quantum circuit that specifies applying, to a many-body system that includes a main system and an auxiliary system, a time-evolution operator that includes a time-independent Hamiltonian and subsequently performing a projective measurement of the auxiliary system, up to a predetermined stage of the forward diffusion process to randomize each of the plurality of first datasets, the main system corresponding to a quantum dataset representing a quantum state.

2. The information processing program according to claim 1, the process further comprising configuring the quantum circuit to specify applying the time-evolution operator including the time-independent Hamiltonian to the many-body system for a time period of a corresponding stage of the forward diffusion process and subsequently performing the projective measurement of the auxiliary system, wherein
the transforming each of the obtained first datasets includes transforming each of the first datasets up to the corresponding stage of the forward diffusion process to randomize each of the first datasets by applying to each of the plurality of first datasets, the main system of the quantum circuit configured for the corresponding stage.

3. The information processing program according to claim 1, the process further comprising configuring the quantum circuit to apply the time-evolution operator including the time-independent Hamiltonian to the many-body system for a time period corresponding to one stage and subsequently perform the projective measurement of the auxiliary system, wherein
the transforming each of the obtained plurality of first datasets includes transforming each of the plurality of first datasets up to the one stage of the forward diffusion process to randomize each of the plurality of first datasets by repeatedly applying the main system of the configured quantum circuit to each of the first datasets a number of times corresponding to the one stage.

4. The information processing program according to claim 2 or 3, the process further comprising randomly initializing the auxiliary system.

5. The information processing program according to any one of claims 2 to 4, the process further comprising:
obtaining a plurality of second datasets each representing a random quantum state, the second datasets to be subjected to a reverse diffusion process that transforms, in stages, a quantum dataset representing a quantum state that follows the target distribution;
sequentially selecting, from a beginning of the reverse diffusion process, combinations of a stage of the reverse diffusion process and a corresponding stage of the forward diffusion process; and
each time one of the combinations is selected, training a variational quantum circuit that represents an operation of the stage of the reverse diffusion process of the selected combination, based on each of the plurality of first datasets before transformation at the stage of the forward diffusion process of the selected combination and each of the plurality of second datasets after transformation at the stage of the reverse diffusion process of the selected combination.

6. An information processing method executed by a computer, the method comprising:
obtaining a plurality of first datasets each representing a quantum state that follows a target distribution, the plurality of first datasets to be subjected to a forward diffusion process that transforms, in stages, a quantum dataset representing a quantum state, to randomize the quantum dataset; and
transforming each of the obtained plurality of first datasets, using a quantum circuit that specifies applying, to a many-body system that includes a main system and an auxiliary system, a time-evolution operator that includes a time-independent Hamiltonian and subsequently performing a projective measurement of the auxiliary system, up to a predetermined stage of the forward diffusion process to randomize each of the plurality of first datasets, the main system corresponding to a quantum dataset representing a quantum state.

7. An information processing device, comprising:
a memory; and
a processor coupled to the memory, the processor being configured to:
obtain a plurality of first datasets each representing a quantum state that follows a target distribution, the plurality of first datasets to be subjected to a forward diffusion process that transforms, in stages, a quantum dataset representing a quantum state, to randomize the quantum dataset; and
transform each of the obtained plurality of first datasets, using a quantum circuit that specifies applying, to a many-body system that includes a main system and an auxiliary system, a time-evolution operator that includes a time-independent Hamiltonian and subsequently performing a projective measurement of the auxiliary system, up to a predetermined stage of the forward diffusion process to randomize each of the plurality of first datasets, the main system corresponding to a quantum dataset representing a quantum state.

8. A computer-readable storage medium having the information processing program of any of claims 1 to 5 stored thereon.
